# EUROPEAN PATENT APPLICATION

(11) **EP 4 642 082 A1**
(43) Date of publication of application: **29.10.2025**
(21) Application number: 24755892.7
(22) Date of filing: 18.01.2024
(51) Int. Cl.: H04W 24/02

(54) **COMMUNICATION METHOD AND DEVICE**

(30) Priority: 16.02.2023 CN 202310185155
(71) Applicant: Huawei Technologies Co., Ltd., Shenzhen, Guangdong 518129 (CN)
(72) Inventor: WANG, Fanfan, Shenzhen, Guangdong 518129 (CN); OLOFSSON, Henrik, Shenzhen, Guangdong 518129 (CN); HU, Xingxing, Shenzhen, Guangdong 518129 (CN); GENG, Tingting, Shenzhen, Guangdong 518129 (CN)
(74) Representative: Gill Jennings & Every LLP
(86) International application number: PCT/CN2024/073097
(87) International publication number: WO 2024/169517

(57) **Abstract**

Embodiments of this application provide a communication method and a device. In the method, a network side can perform cause analysis on a secondary cell group (Secondary Cell Group, SCG) failure of a terminal device based on SCG failure information reported by the terminal device, and determine a problematic node for wrong candidate primary secondary cell selection, so that configuration optimization on the network side can be completed, and more proper configuration can be performed for the terminal device in a subsequent primary secondary cell addition or change procedure of the UE, to reduce a probability of the SCG failure of the terminal device.

## Description

### CROSS-REFERENCE TO RELATED APPLICATIONS

This application claims priority to Chinese Patent Application No. 202310185155.6, filed with the China National Intellectual Property Administration on February 16, 2023 and entitled "COMMUNICATION METHOD AND DEVICE", which is incorporated herein by reference in its entirety.

### TECHNICAL FIELD

This application relates to the field of communication technologies, and in particular, to a communication method and a device.

### BACKGROUND

In a mobile communication system, mobility management of a terminal device in a connected state is controlled by a network side.

For example, in a dual-connectivity (dual-connectivity, DC) scenario, a master node notifies, by using RRC signaling, the terminal device of a configuration parameter related to primary secondary cell (primary second cell, PSCell) addition or change (PSCell addition/change, PAC). The terminal device may initiate random access to a target secondary node based on the configuration parameter related to PSCell addition or change in the RRC signaling, to perform a PAC procedure.

To improve a cell handover success rate of the terminal device, a conditional PSCell addition or change (conditional PSCell addition/change, CPAC) mechanism is introduced in the mobile communication system. The CPAC mechanism is as follows: In the dual-connectivity scenario, the master node sends CPAC configuration information to the terminal device by using RRC signaling. The CPAC configuration information includes a CPAC triggering condition, a candidate primary secondary cell list, a radio air interface configuration of each candidate primary secondary cell, a measurement configuration, and the like. After receiving the CPAC configuration information, the terminal device continues to maintain connection and transmission with a source PSCell, and continuously determines whether there is a candidate primary secondary cell that meets the CPAC triggering condition. When the terminal device detects that a target candidate primary secondary cell meets the CPAC triggering condition, the terminal device may initiate random access to a target secondary node that manages the target candidate primary secondary cell, to perform a PAC procedure.

However, based on the CPAC mechanism, in the PAC procedure performed by the terminal device, a handover failure or a secondary cell group (secondary cell group, SCG) failure (namely, a PAC failure) may occur. How to analyze the SCG failure occurring on the terminal device to optimize a related configuration on a network side is content that needs to be urgently studied by a person skilled in the art.

### SUMMARY

This application provides a communication method and a device, to perform cause analysis on an SCG failure of a terminal device.

According to a first aspect, an embodiment of this application provides a communication method, and the method may be applied to a master node. The method includes the following steps.

The master node obtains identification information of at least one first candidate primary secondary cell, and sends configuration information of at least one second candidate primary secondary cell to a terminal device, where the at least one first candidate primary secondary cell includes the at least one second candidate primary secondary cell, and the at least one second candidate primary secondary cell includes at least one third candidate primary secondary cell accepted by each of at least one candidate secondary node. The master node receives first SCG failure information from the terminal device. The master node determines an initial cause of an SCG failure of the terminal device based on the first SCG failure information; or the master node sends second SCG failure information to a first secondary node based on the first SCG failure information; or the master node sends the second SCG failure information to a second secondary node based on the first SCG failure information, where the second SCG failure information is used to determine a cause of the SCG failure of the terminal device, and the cause of the SCG failure is used to determine a problematic node for wrong candidate primary secondary cell selection; the first secondary node is a secondary node to which a source primary secondary cell belongs in a primary secondary cell change procedure performed by the terminal device; the second secondary node includes at least one candidate secondary node to which the at least one first candidate primary secondary cell belongs, or the second secondary node includes the at least one candidate secondary node to which the at least one first candidate primary secondary cell belongs and the first secondary node; and the initial cause is used to analyze a possible problematic node for wrong candidate primary secondary cell selection.

In the method, when the SCG failure occurs in a primary secondary cell addition or change procedure performed by the terminal device, after the master node receives the first SCG failure information reported by the terminal device, the master node may perform cause analysis on the SCG failure of the terminal device based on the first SCG failure information; or may send the second SCG failure information to the first secondary node or the second secondary node, so that the first secondary node or the second secondary node can perform cause analysis on the SCG failure of the terminal device based on the second SCG failure information. According to the method, a network side can implement cause analysis on the SCG failure of the terminal device based on the SCG failure information reported by the terminal device, and determine a problematic node for wrong candidate primary secondary cell selection, so that configuration optimization on the network side can be completed, and more proper configuration can be performed for the terminal device in a subsequent primary secondary cell addition or change procedure of the UE, to reduce a probability of the SCG failure of the terminal device.

In a possible design, the master node generates the identification information of the at least one first candidate primary secondary cell. Based on this, the master node may determine the initial cause of the SCG failure of the terminal device based on the first SCG failure information in the following steps:
The master node determines a suitable primary secondary cell based on the first SCG failure information. If the suitable primary secondary cell is not in the at least one first candidate primary secondary cell, the master node determines that the initial cause is that the master node is a problematic node that possibly causes wrong candidate primary secondary cell selection. If the suitable primary secondary cell is in the at least one first candidate primary secondary cell and is not in at least one third candidate primary secondary cell accepted by a third secondary node, the master node determines that the initial cause is that the third secondary node is a problematic node that possibly causes wrong candidate primary secondary cell selection, where the third secondary node is a secondary node to which the suitable primary secondary cell belongs.

According to this design, in a scenario in which the master node triggers a primary secondary cell addition or change procedure, the master node may perform initial cause analysis, and determine that the master node or the third secondary node is a problematic node that possibly causes wrong candidate primary secondary cell selection.

In a possible design, when the initial cause is that the master node is a problematic node that possibly causes wrong candidate primary secondary cell selection, the master node may further determine a root cause of the SCG failure of the terminal device in the following step:
If the suitable primary secondary cell is in a first cell set, the master node determines that the root cause is that the master node is a problematic node that causes wrong candidate primary secondary cell selection, where the first cell set includes N cells (working at an SCG frequency) that have best signal quality in a first measurement result.

According to this design, when the initial cause is related to the master node, the master node may further perform root cause analysis, and determine whether the master node is a problematic node that causes wrong candidate primary secondary cell selection.

In a possible design, the master node receives the identification information of the at least one first candidate primary secondary cell from the first secondary node. Based on this, the master node may determine the initial cause of the SCG failure of the terminal device based on the first SCG failure information in the following steps:
The master node determines a suitable primary secondary cell based on the first SCG failure information. If the suitable primary secondary cell is not in the at least one first candidate primary secondary cell, the master node determines that the initial cause is that the first secondary node is a problematic node that possibly causes wrong candidate primary secondary cell selection. If the suitable primary secondary cell is in the at least one first candidate primary secondary cell and is not in at least one third candidate primary secondary cell accepted by a third secondary node, the master node determines that the initial cause is that the third secondary node is a problematic node that possibly causes wrong candidate primary secondary cell selection, where the third secondary node is a secondary node to which the suitable primary secondary cell belongs.

According to this design, in a scenario in which the first secondary node triggers a primary secondary cell change procedure, the master node performs initial cause analysis, and determines that the first secondary node or the third secondary node is a problematic node that possibly causes wrong candidate primary secondary cell selection.

In a possible design, when the initial cause is that the first secondary node is a problematic node that possibly causes wrong candidate primary secondary cell selection, the master node may further send the second SCG failure information to the first secondary node.

According to this design, when the initial cause is related to the first secondary node, the master node may send the second SCG failure information to the first secondary node, so that the first secondary node performs root cause analysis.

In a possible design, when the initial cause is that the third secondary node is a problematic node that possibly causes wrong candidate primary secondary cell selection, the master node may further determine a root cause of the SCG failure of the terminal device in the following step:
If the suitable primary secondary cell is in a second cell set, the master node determines that the root cause is that the third secondary node is a problematic node that causes wrong candidate primary secondary cell selection, where the second cell set includes M cells (working at an SCG frequency) that are managed by the third secondary node and that have best signal quality in a first measurement result.

According to this design, when the initial cause is related to the third secondary node, the master node may further perform root cause analysis, and determine whether the third secondary node is a problematic node that causes wrong candidate primary secondary cell selection.

In a possible design, when the initial cause is that the third secondary node is a problematic node that possibly causes wrong candidate primary secondary cell selection, the master node sends the second SCG failure information to the third secondary node.

According to this design, when the initial cause is related to the third secondary node, the master node may send the second SCG failure information to the third secondary node, so that the third secondary node performs root cause analysis.

In a possible design, after the master node sends the second SCG failure information to the first secondary node based on the first SCG failure information, the master node may further receive a first notification message from the first secondary node, where the first notification message includes first indication information, the first indication information indicates that the SCG failure of the terminal device is not caused by the first secondary node, or indicates that the SCG failure of the terminal device is caused by a third secondary node, the third secondary node is a secondary node to which a suitable primary secondary cell belongs, and the suitable primary secondary cell is determined by the first secondary node based on the second SCG failure information. Optionally, the first notification message may include a measurement result obtained by the first secondary node by parsing the second SCG failure information, or identification information of the suitable primary secondary cell, or information about the third secondary node, so that the master node can determine the third secondary node.

According to this design, when determining, through SCG cause analysis, that the SCG failure of the terminal device is not caused by the first secondary node, the first secondary node may notify the master node of the case, so that the master node performs subsequent processing.

In a possible design, after receiving the first notification message, the master node may further send the second SCG failure information to the third secondary node.

According to this design, when determining, by using the first notification message, that the initial cause is related to the third secondary node, the master node sends the second SCG failure information to the third secondary node, so that the third secondary node performs root cause analysis.

In a possible design, after the master node sends the second SCG failure information to the third secondary node, the master node may further receive a second notification message from the third secondary node, where the second notification message includes second indication information, and the second indication information indicates that the SCG failure of the terminal device is not caused by the third secondary node.

According to this design, when determining, through SCG cause analysis, that the SCG failure of the terminal device is not caused by the third secondary node, the third secondary node may notify the master node, so that the master node performs subsequent processing.

In a possible design, after the master node sends the second SCG failure information to the second secondary node based on the first SCG failure information, the master node may further receive a third notification message from a fourth secondary node in the second secondary node, where the third notification message includes third indication information, and the third indication information indicates that the SCG failure of the terminal device is not caused by the fourth secondary node.

According to this design, when determining, through SCG cause analysis, that the SCG failure of the terminal device is not caused by the fourth secondary node, the fourth secondary node may notify the master node, so that the master node performs subsequent processing.

According to a second aspect, an embodiment of this application provides a communication method. The method may be applied to a first secondary node. The method includes the following steps.

The first secondary node sends identification information of at least one first candidate primary secondary cell to a master node, where the first secondary node is a secondary node to which a source primary secondary cell belongs in a primary secondary cell change procedure performed by a terminal device. The first secondary node receives second SCG failure information from the master node. The first secondary node determines an initial cause of an SCG failure of the terminal device based on the second SCG failure information; or the first secondary node determines a root cause of the SCG failure of the terminal device based on the second SCG failure information.

According to the method, in a scenario in which the first secondary node performs a primary secondary cell change procedure, the first secondary node may perform cause analysis on the SCG failure of the terminal device based on the second SCG failure information sent by the master node. According to the method, a network side can implement cause analysis on the SCG failure of the terminal device based on the SCG failure information reported by the terminal device, and determine a problematic node for wrong candidate primary secondary cell selection, so that configuration optimization on the network side can be completed, and more proper configuration can be performed for the terminal device in a subsequent primary secondary cell addition or change procedure of the UE, to reduce a probability of the SCG failure of the terminal device.

In a possible design, the first secondary node may determine the initial cause of the SCG failure of the terminal device based on the second SCG failure information in the following steps:
The first secondary node determines a suitable primary secondary cell based on the second SCG failure information. If the suitable primary secondary cell is not in the at least one first candidate primary secondary cell, the first secondary node determines that the initial cause is that the first secondary node is a problematic node that possibly causes wrong candidate primary secondary cell selection. If the suitable primary secondary cell is in the at least one first candidate primary secondary cell and is not in at least one third candidate primary secondary cell accepted by a third secondary node, the first secondary node determines that the initial cause is that the third secondary node is a problematic node that possibly causes wrong candidate primary secondary cell selection, where the third secondary node is a secondary node to which the suitable primary secondary cell belongs, and identification information of the at least one third candidate primary secondary cell accepted by the third secondary node is sent by the master node.

According to this design, the first secondary node may perform initial cause analysis, and determine that the first secondary node or the third secondary node is a problematic node that possibly causes wrong candidate primary secondary cell selection.

In a possible design, when the initial cause is that the third secondary node is a problematic node that possibly causes wrong candidate primary secondary cell selection, the method further includes:
The first secondary node sends a first notification message to the master node, where the first notification message includes first indication information, and the first indication information indicates that the SCG failure of the terminal device is not caused by the first secondary node, or indicates that the SCG failure of the terminal device is caused by the third secondary node. Optionally, the first notification message may include a measurement result obtained by the first secondary node by parsing the second SCG failure information, or identification information of the suitable primary secondary cell, or information about the third secondary node, so that the master node can determine the third secondary node.

According to this design, when determining, through SCG cause analysis, that the SCG failure of the terminal device is not caused by the first secondary node, the first secondary node may notify the master node of the case, so that the master node performs subsequent processing.

In a possible design, when the initial cause is that the first secondary node is a problematic node that possibly causes wrong candidate primary secondary cell selection, the first secondary node may further continue to determine the root cause of the SCG failure of the terminal device in the following step:
If the suitable primary secondary cell is in a first cell set, the first secondary node determines that the root cause is that the first secondary node is a problematic node that causes wrong candidate primary secondary cell selection, where the first cell set includes N cells (working at an SCG frequency) that have best signal quality in a first measurement result.

According to this design, when the initial cause is related to the first secondary node, the first secondary node may further perform root cause analysis, and determine whether the first secondary node is a problematic node that causes wrong candidate primary secondary cell selection.

In a possible design, when the initial cause is that the third secondary node is a problematic node that possibly causes wrong candidate primary secondary cell selection, the first secondary node may further determine the root cause of the SCG failure of the terminal device in the following step:
If the suitable primary secondary cell is in a second cell set, the first secondary node determines that the root cause is that the third secondary node is a problematic node that causes wrong candidate primary secondary cell selection, where the second cell set includes M cells (working at an SCG frequency) that are managed by the third secondary node and that have best signal quality in a first measurement result.

According to this design, when the initial cause is related to the third secondary node, the first secondary node may further perform root cause analysis, and determine whether the third secondary node is a problematic node that causes wrong candidate primary secondary cell selection.

In a possible design, when the root cause is that the third secondary node is a problematic node that causes wrong candidate primary secondary cell selection, the first secondary node sends a first notification message to the master node, where the first notification message includes first indication information, and the first indication information indicates that the SCG failure of the terminal device is caused by the third secondary node.

According to this design, when determining, through root cause analysis, that the SCG failure of the terminal device is caused by the third secondary node, the first secondary node may notify the master node of the case, so that the master node performs subsequent processing.

In a possible design, the first secondary node may determine the root cause of the SCG failure of the terminal device based on the second SCG failure information in the following steps:
The first secondary node determines a suitable primary secondary cell based on the second SCG failure information. If the suitable primary secondary cell is in a first cell set, the first secondary node determines that the root cause is that the first secondary node is a problematic node that causes wrong candidate primary secondary cell selection, where the first cell set includes N cells that have best signal quality in a first measurement result.

According to this design, the first secondary node may perform root cause analysis based on the second SCG failure information, and determine whether the first secondary node is a problematic node that causes wrong candidate primary secondary cell selection.

In a possible design, if the suitable primary secondary cell is not in the first cell set, the first secondary node may further send a first notification message to the master node, where the first notification message includes first indication information, and the first indication information indicates that the SCG failure of the terminal device is not caused by the first secondary node.

According to this design, when determining, through root cause analysis, that the first secondary node is not a problematic node that causes wrong candidate primary secondary cell selection, the first secondary node may notify the master node of the case, so that the master node performs subsequent processing.

According to a third aspect, an embodiment of this application provides a communication method. The method may be applied to a third secondary node. The third secondary node receives second SCG failure information from a master node, where the third secondary node is a secondary node to which a suitable primary secondary cell belongs, and the suitable primary secondary cell is determined by the master node. The third secondary node determines an initial cause of an SCG failure of a terminal device based on the second SCG failure information; or the third secondary node determines a root cause of the SCG failure of the terminal device based on the second SCG failure information.

According to the method, when the SCG failure occurs in a primary secondary cell addition or change procedure performed by the terminal device, the third secondary node to which the suitable primary secondary cell belongs may perform cause analysis on the SCG failure of the terminal device based on the second SCG failure information sent by the master node. According to the method, a network side can implement cause analysis on the SCG failure of the terminal device based on the SCG failure information reported by the terminal device, and determine a problematic node for wrong candidate primary secondary cell selection, so that configuration optimization on the network side can be completed, and more proper configuration can be performed for the terminal device in a subsequent primary secondary cell addition or change procedure of the UE, to reduce a probability of the SCG failure of the terminal device.

In a possible design, before the third secondary node receives the second SCG failure information from the master node, the third secondary node may further receive, from the master node, identification information of at least one first candidate primary secondary cell managed by the third secondary node. Based on this, the third secondary node may determine the initial cause of the SCG failure of the terminal device based on the second SCG failure information in the following steps:
The third secondary node determines a suitable primary secondary cell based on the second SCG failure information. If the suitable primary secondary cell is in the at least one first candidate primary secondary cell, the third secondary node determines that the initial cause is that the third secondary node is a problematic node that possibly causes wrong candidate primary secondary cell selection. If the suitable primary secondary cell is not in the at least one first candidate primary secondary cell, the third secondary node determines that the initial cause is that the third secondary node is not a problematic node that causes wrong candidate primary secondary cell selection.

According to this design, the third secondary node may perform initial cause analysis, and determine whether the third secondary node is a problematic node that possibly causes wrong candidate primary secondary cell selection.

In a possible design, when the initial cause is that the third secondary node is a problematic node that possibly causes wrong candidate primary secondary cell selection, the third secondary node may further determine the root cause of the SCG failure of the terminal device in the following step:
If the suitable primary secondary cell is in a second cell set, the third secondary node determines that the root cause is that the third secondary node is a problematic node that causes wrong candidate cell selection, where the second cell set includes M cells that are managed by the third secondary node and that have best signal quality in a first measurement result.

According to this design, when the initial cause is related to the third secondary node, the third secondary node may further perform root cause analysis, and determine whether the third secondary node is a problematic node that causes wrong candidate primary secondary cell selection.

In a possible design, when the initial cause is that the third secondary node is not a problematic node that causes wrong candidate primary secondary cell selection, the third secondary node sends a second notification message to the master node, where the second notification message includes second indication information, and the second indication information indicates that the SCG failure of the terminal device is not caused by the third secondary node.

According to this design, when determining, through initial cause analysis, that the SCG failure of the terminal device is not caused by the third secondary node, the third secondary node may notify the master node of the case, so that the master node performs subsequent processing.

In a possible design, the third secondary node may determine the root cause of the SCG failure of the terminal device based on the second SCG failure information in the following steps:
The third secondary node determines a suitable primary secondary cell based on the second SCG failure information. If the suitable primary secondary cell is in a second cell set, the third secondary node determines that the root cause is that the third secondary node is a problematic node that causes wrong candidate cell selection, where the second cell set includes M cells that are managed by the third secondary node and that have best signal quality in a first measurement result.

According to this design, the third secondary node may perform root cause analysis, and determine whether the third secondary node is a problematic node that possibly causes wrong candidate primary secondary cell selection.

According to a fourth aspect, an embodiment of this application provides a communication method. The method may be applied to a fourth secondary node in a second secondary node. The second secondary node includes at least one candidate secondary node, or the second secondary node includes the at least one candidate secondary node and a first secondary node. When the fourth secondary node is the first secondary node or a third secondary node to which a suitable primary secondary cell belongs, for a method of the fourth secondary node, refer to the method provided in the second aspect or the third aspect. When the fourth secondary node is a candidate secondary node other than the first secondary node and the third secondary node in the second secondary node, the method includes the following steps:
The fourth secondary node receives a second SCG failure information from a master node. The fourth secondary node determines an initial cause of an SCG failure of a terminal device based on the second SCG failure information.

According to the method, when the SCG failure occurs in a primary secondary cell addition or change procedure performed by the terminal device, after the master node receives first SCG failure information reported by the terminal device, the master node may send the second SCG failure information to the second secondary node, so that each fourth secondary node in the second secondary node can perform cause analysis on the SCG failure of the terminal device based on the second SCG failure information.

In a possible design, before the fourth secondary node receives the second SCG failure information from the master node, the fourth secondary node may further receive, from the master node, identification information of at least one first candidate primary secondary cell managed by the fourth secondary node. Based on this, the fourth secondary node may further determine the initial cause of the SCG failure of the terminal device based on the second SCG failure information in the following steps:
The fourth secondary node determines a suitable primary secondary cell based on the second SCG failure information.

If the suitable primary secondary cell is in the at least one first candidate primary secondary cell, the fourth secondary node determines that the initial cause is that the fourth secondary node is a problematic node that possibly causes wrong candidate primary secondary cell selection. If the suitable primary secondary cell is not in the at least one candidate primary secondary cell, the fourth secondary node determines that the initial cause is that the fourth secondary node is not a problematic node that causes wrong candidate primary secondary cell selection.

According to this design, the fourth secondary node may perform initial cause analysis, and determine whether the fourth secondary node is a problematic node that possibly causes wrong candidate primary secondary cell selection.

In a possible design, when the initial cause is that the fourth secondary node is not a problematic node that causes wrong candidate primary secondary cell selection, the fourth secondary node may further send a third notification message to the master node, where the third notification message includes third indication information, and the third indication information indicates that the SCG failure of the terminal device is not caused by the fourth secondary node.

According to this design, when determining, through initial cause analysis, that the SCG failure of the terminal device is not caused by the fourth secondary node, the fourth secondary node may notify the master node of the case, so that the master node performs subsequent processing.

According to a fifth aspect, an embodiment of this application provides a communication apparatus, including units configured to perform steps in the first aspect to the fourth aspect. Optionally, the communication apparatus may include a communication unit and a processing unit. The communication unit is configured to receive and send data, and the processing unit is configured to perform the method provided in any one of the foregoing aspects.

According to a sixth aspect, an embodiment of this application provides a communication device, including a transceiver, a memory, and a processor. The memory is configured to store program instructions, and the processor is configured to read the program instructions in the memory, to implement the method provided in any one of the foregoing aspects.

According to a seventh aspect, an embodiment of this application provides a communication device, including at least one processing element and at least one storage element. The at least one storage element is configured to store a program and data, and the at least one processing element is configured to perform the method provided in any one of the foregoing aspects of this application.

According to an eighth aspect, an embodiment of this application further provides a computer program. When the computer program is run on a computer, the computer is enabled to perform the method provided in any one of the foregoing aspects. Optionally, the computer may be a network device or a terminal device.

According to a ninth aspect, an embodiment of this application further provides a computer-readable storage medium. The computer-readable storage medium stores a computer program, and when the computer program is executed by a computer, the computer is enabled to perform the method provided in any one of the foregoing aspects. Optionally, the computer may be a network device or a terminal device.

According to a tenth aspect, an embodiment of this application further provides a chip. The chip is configured to read a computer program stored in a memory, to perform the method provided in any one of the foregoing aspects. Optionally, the chip may include a processor and a memory. The processor is coupled to the memory, and configured to read the computer program stored in the memory, to implement the methods provided in the foregoing embodiments.

According to an eleventh aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete device.

For technical effects that can be achieved in the foregoing aspects, refer to descriptions of technical effects that can be achieved in any one of the possible designs of the first aspect to the fifth aspect. Repeated parts are not described again.

### BRIEF DESCRIPTION OF DRAWINGS

FIG. 1 is a diagram of an architecture of a mobile communication system according to an embodiment of this application;
FIG. 2 is a diagram of a network structure of a base station according to an embodiment of this application;
FIG. 3 is a diagram of an architecture of a mobile communication system in a DC scenario according to an embodiment of this application;
FIG. 4 is a diagram of an architecture of a control plane of a mobile communication system in a DC scenario according to an embodiment of this application;
FIG. 5 is a diagram of a plurality of DC network deployment modes according to an embodiment of this application;
FIG. 6 is a flowchart of a classic cell handover according to an embodiment of this application;
FIG. 7 is a flowchart of a CHO according to an embodiment of this application;
FIG. 8 is a flowchart of classic PAC according to an embodiment of this application;
FIG. 9 is a flowchart of CPAC according to an embodiment of this application;
FIG. 10 is a flowchart of a communication method according to an embodiment of this application;
FIG. 11 is a flowchart of another communication method according to an embodiment of this application;
FIG. 12 is a flowchart of still another communication method according to an embodiment of this application;
FIG. 13 is a flowchart of an instance of a communication method according to an embodiment of this application;
FIG. 14 is a flowchart of an instance of another communication method according to an embodiment of this application;
FIG. 15 is a flowchart of an instance of still another communication method according to an embodiment of this application;
FIG. 16 is a flowchart of yet another communication method according to an embodiment of this application;
FIG. 17 is a diagram of a structure of a communication apparatus according to an embodiment of this application; and
FIG. 18 is a diagram of a structure of a communication device according to an embodiment of this application.

### DESCRIPTION OF EMBODIMENTS

This application provides a communication method and a device, to perform cause analysis on an SCG failure of a terminal device. The method and the device are based on same technical concept. Because problem resolving principles of the method and the device are similar, for implementation of the device and the method, refer to each other, and repeated parts are not described again.

The following describes some terms in this application, to facilitate understanding of a person skilled in the art.
(1) A terminal device is a device that provides voice and/or data connectivity for a user. The terminal device may also be referred to as user equipment (user equipment, UE), a mobile station (mobile station, MS), a mobile terminal (mobile terminal, MT), a terminal, or the like. In some subsequent descriptions of this application, the terminal device may be represented as UE.
   For example, the terminal device may be a handheld device, a vehicle-mounted device, or a road side unit that has a wireless connection function. Currently, some examples of the UE are a mobile phone (mobile phone), a tablet computer, a notebook computer, a palmtop computer, a mobile internet device (mobile internet device, MID), an intelligent point of sale (point of sale, POS), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), various smart meters (a smart water meter, a smart electricity meter, and a smart gas meter), eLTE-DSA UE, a device having an integrated access and backhaul (integrated access and backhaul, IAB) capability, an in-vehicle electronic control unit (electronic control unit, ECU), an in-vehicle computer, an in-vehicle cruise system, a telematics box (telematics box, T-BOX), and the like.
(2) A base station is a device that connects a terminal device to a wireless network in a mobile communication system. As a node in a radio access network, the base station may also be referred to as a network device, may also be referred to as a radio access network (radio access network, RAN) node (or device), or may be referred to as an access point (access point, AP).

Currently, some examples of the base station are a generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), an access point (access point, AP), a home base station (for example, a home evolved NodeB, or a home NodeB, HNB), a baseband unit (baseband unit, BBU), or the like.

In addition, in a network structure, the base station may include a central unit (central unit, CU) node and a distributed unit (distributed unit, DU) node, or a RAN device including a CU node and a DU node. In this structure, protocol layers of an eNB in a long term evolution (long term evolution, LTE) system are separated, or protocol layers of a gNB in a new radio (new radio, NR) system are separated. Some functions of protocol layers are centrally controlled by the CU, and functions of remaining or all protocol layer are distributed in the DU, and the CU centrally controls the DU.

(3) A core network device is a device, in a core network (core network, CN), that provides service support for a terminal device. Currently, some examples of the core network device are an access and mobility management function (access and mobility management function, AMF) entity, a session management function (session management function, SMF) entity, a user plane function (user plane function, UPF) entity, and the like, which are not enumerated herein. The AMF entity may be responsible for access management and mobility management of the terminal device. The SMF entity may be responsible for session management, for example, session establishment of the terminal device. The UPF entity may be a functional entity on the user plane, and is mainly responsible for a connection to an external network. It should be noted that, an entity in this application may also be referred to as a network element or a functional entity. For example, the AMF entity may also be referred to as an AMF network element or an AMF functional entity. For another example, the SMF entity may also be referred to as an SMF network element or an SMF functional entity.

(4) The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

It should be noted that "a plurality of" in this application means two or more than two. "At least one" means one or more.

In embodiments of this application, descriptions such as "when", "in a case", and "if" mean that a device (for example, a device such as a terminal device or a base station) performs corresponding processing in an objective situation, and are not intended to limit time, and the device (for example, the device such as the terminal device or the base station) is not required to perform a determining action during implementation; and do not mean any other limitation.

It should be noted that in this application, "indicating" may include directly indicating and indirectly indicating. When indication information indicates A, the indication information may directly indicate A or indirectly indicate A, but it does not indicate that the indication information definitely carries A. In an example in which first information indicates first content, the first information may include the first content, or may include a part of the first content or an identifier, an index, or the like of the first content, or may include an algorithm, a calculation parameter, or the like for determining the first content. A manner of "indicating" is not limited in this application.

In this application, "containing/including A" may be equivalent to "containing/including information about A". The information about A indicates A.

In addition, it should be understood that in descriptions of this application, terms such as "first" and "second" are merely used for distinguishing and description, but should not be understood as indicating or implying relative importance, or should not be understood as indicating or implying a sequence.

The following describes in detail embodiments of this application with reference to the accompanying drawings.

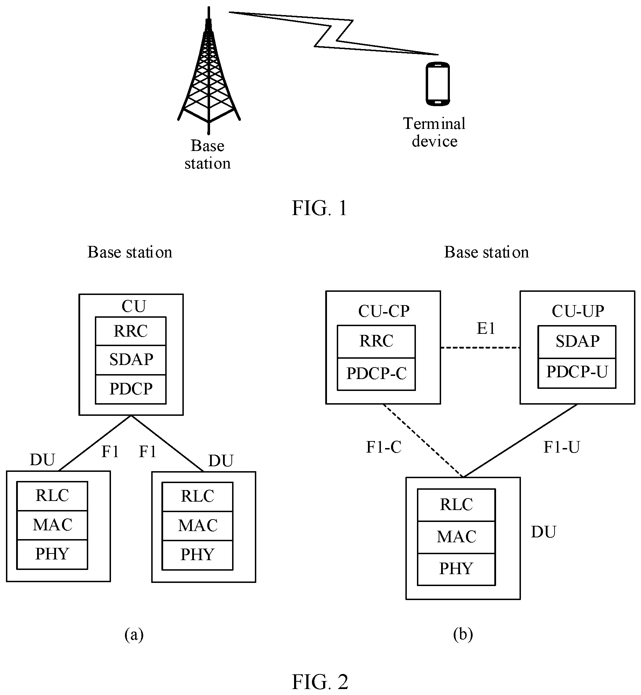

FIG. 1 shows a structure of a mobile communication system to which a method according to an embodiment of this application is applicable. Refer to FIG. 1. The mobile communication system includes a base station and a terminal device.

The base station is an entity that can receive and transmit a radio signal on a network side, is responsible for providing a service related to radio access for the terminal device in coverage of the base station, and implements a physical layer function and functions of resource scheduling and radio resource management, quality of service (Quality of Service, QoS) management, radio access control, and mobility management. The terminal device can access a core network and finally connect to a data network through the base station, to implement a service of the terminal device.

Each base station is responsible for managing at least one cell. Each cell uses a corresponding spectrum resource to provide an access service for the terminal device.

In a mobile communication system, the base station may provide a wireless access service for a terminal device by using a corresponding radio access technology (radio access technology, RAT). For example, the RAT may be the 4^{th} generation (The 4^{th} Generation, 4G) RAT, the 5^{th} generation (The 5^{th} Generation, 5G) RAT, the 6^{th} generation (The 6^{th} Generation, 6G) RAT, or the like.

The terminal device is an entity that can receive and transmit a radio signal on a user side, and may access a network by accessing a cell managed by a base station. The terminal device may be various devices that provide voice and/or data connectivity for a user, for example, a vehicle-mounted device or a smartphone. The terminal device and the base station may be connected through a Uu interface, to implement communication between the terminal device and the base station.

In the mobile communication system, a Uu interface protocol stack can be divided into a non-access stratum (non-access stratum, NAS) and an access stratum (access stratum, AS) based on whether signaling and a process are related to access.

The NAS is used to process signaling or data transmission between the UE and a core network. Transmitted content may include user information or control information, for example, related signaling used for service setup or release, or mobility management information. A NAS message is in a structure irrelevant to the AS, but needs to be transmitted based on an AS protocol stack.

The AS protocol stack is a protocol used by a radio access network, that is, a radio interface protocol, and includes a control plane protocol stack and a user plane protocol stack. The user plane protocol stack includes at least the following protocol layers: a physical (physical, PHY) layer, a medium access control (medium access control, MAC) layer, a radio link control (radio link control, RLC) layer, a packet data convergence protocol (packet data convergence protocol, PDCP) layer, and a service data adaptation protocol (service data adaptation protocol, SDAP) layer. The control plane protocol stack includes at least the following protocol layers: a PHY layer, a MAC layer, an RLC layer, a PDCP layer, and a radio resource control (radio resource control, RRC) layer.

It can be learned from the term explanation of the base station in (2) that, in a network structure, the base station may include two types of nodes: a CU and a DU. In an implementation, as shown in (a) in FIG. 2, the CU is deployed with an RRC layer, a PDCP layer, and an SDAP layer in a protocol stack, and the DU is deployed with an RLC layer, a MAC layer, and a PHY in the protocol stack. In this way, the CU has processing capabilities of the RRC layer, the PDCP layer, and the SDAP layer. The DU has processing capabilities of the RLC layer, the MAC layer, and the PHY layer. The CU and the DU communicate with each other through an F1 interface. The CU represents the base station connected to the core network through an Ng interface.

It may be understood that the foregoing function division is merely an example, and constitutes no limitation on functions of the CU and the DU. In other words, there may be another function division manner between the CU and the DU. Details are not described in embodiments of this application. Functions of the CU may be implemented by one entity or different entities. For example, as shown in (b) in FIG. 2, the functions of the CU may be further divided. For example, a control plane (control plane, CP) and a user plane (user plane, UP) are separated. That is, the CU is split into a CU-control plane (namely, a CU-CP) and a CU-user plane (namely, a CU-UP). For example, the CU-CP and the CU-UP may be implemented by different function entities, and the CU-CP and the CU-UP may be coupled to the DU, to jointly implement a function of a base station. Optionally, the CU-control plane CU-CP may be further of an architecture of further division. To be specific, the existing CU-CP is further divided into a CU-CP 1 and a CU-CP 2. The CU-CP 1 includes various radio resource management functions, and the CU-CP 2 includes only an RRC function and a PDCP-C function (namely, a basic function of control plane signaling at the PDCP layer). In a possible manner, the CU-CP is responsible for control plane functions, mainly including RRC and PDCP-control plane (PDCP-control plane, PDCP-C) functions. The PDCP-C is mainly responsible for data encryption/decryption, integrity protection, data transmission, and the like of the control plane. The CU-UP is responsible for user plane functions, mainly including SDAP and PDCP-user plane (PDCP-user plane, PDCP-U) functions. The SDAP is mainly responsible for processing data of a core network and mapping a data flow (flow) to a bearer. The PDCP-U is mainly responsible for data plane encryption and decryption, integrity protection, header compression, sequence number maintenance, data transmission, and the like. The CU-CP and the CU-UP are connected through an E1 interface. The CU-CP represents that the base station is connected to a core network through an Ng interface, and is connected to the DU through an F1-control plane (F1-control plane, F1-C) interface. The CU-UP is connected to the DU through an F1-user plane (F1-user plane, F1-U) interface. Certainly, in another possible implementation, the PDCP-C is alternatively in the CU-UP.

It should be further noted that the mobile communication system shown in FIG. 1 is used as an example, and does not constitute a limitation on a mobile communication system to which the methods provided in embodiments of this application are applicable. In conclusion, the technical solutions provided in embodiments of this application may be applied to various communication systems, for example, a 5^{th} generation (The 5th Generation, 5G) communication system (also referred to as a new radio (new radio, NR) system), a 4^{th} generation (The 4^{th} Generation, 4G) communication system (also referred to as a long term evolution (Long Term Evolution, LTE) communication system), a Wi-Fi system, vehicle to everything (vehicle to everything, V2X), long term evolution-internet of vehicles (LTE-vehicle, LTE-V), vehicle to vehicle (vehicle to vehicle, V2V), the internet of vehicles, machine type communication (Machine Type Communications, MTC), the internet of things (internet of things, IoT), long term evolutionmachine to machine (LTE-machine to machine, LTE-M), machine to machine (machine to machine, M2M), and a worldwide interoperability for microwave access (worldwide interoperability for microwave access, WiMAX) communication system. This is not limited in embodiments of this application. The 5G communication system may include a non-standalone (non-standalone, NSA) system and/or a standalone (standalone, SA) system. In addition, the technical solutions provided in this application may be further applied to a future communication system, for example, the sixth generation (The 6th Generation, 6G) communication system. This is not limited in this application.

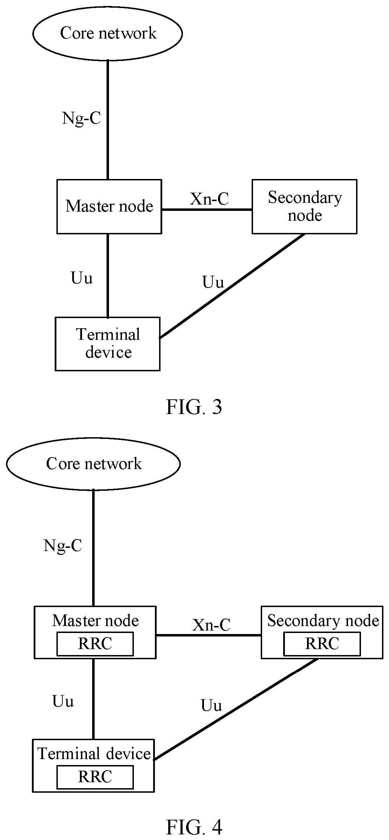

In the mobile communication system shown in FIG. 1, the terminal device may establish a connection to one base station. This communication scenario may also be referred to as a single-connectivity scenario of the terminal device. To improve quality of service of the mobile communication system, this application further provides another mobile communication system. As shown in FIG. 3, one terminal device in the mobile communication system may communicate with a plurality of base stations. This phenomenon can be referred to as dual-connectivity (dual-connectivity, DC) or multi-rate dual-connectivity (multi-rate dual-connectivity, MR-DC). The plurality of base stations may be base stations that use a same RAT (for example, all the base stations are 4G base stations or 5G base stations), or may be base stations that use different RATs (for example, one base station is a 4G base station and one base station is a 5G base station).

In the mobile communication system shown in FIG. 3, for descriptions of functions of the terminal device and the base station, refer to the foregoing descriptions of the mobile communication system shown in FIG. 1. Details are not described herein again.

In the mobile communication system, a network side may provide a communication service for the terminal device by using resources of the plurality of base stations, to provide highrate transmission for the terminal device. In the plurality of base stations that provide services for the terminal device, a base station that exchanges control plane signaling with a core network is referred to as a master node (master node, MN), and another base station is referred to as a secondary node (secondary node, SN).

In a DC scenario, each base station has different RLC/MAC entities. In addition, as shown in FIG. 4, the master node and the secondary node each have an RRC entity, and each may generate an RRC message (that is, a control message, for example, a measurement configuration message). The secondary node may directly send the RRC message generated by the secondary node to the terminal device (in this case, the terminal device may also directly send a generated RRC message to the secondary node). Alternatively, the secondary node may notify the master node of the RRC message generated by the secondary node, and the master node sends the RRC message to the terminal device (in this case, the terminal device may also forward, to the secondary node through the master node, an RRC message that needs to be transmitted to the secondary node, that is, the terminal device sends these RRC messages to the master node, and the master node forwards the messages to the secondary node). The RRC message directly exchanged between the secondary node and the terminal device may be referred to as a signaling radio bearer (signal radio bearer, SRB) 3 message.

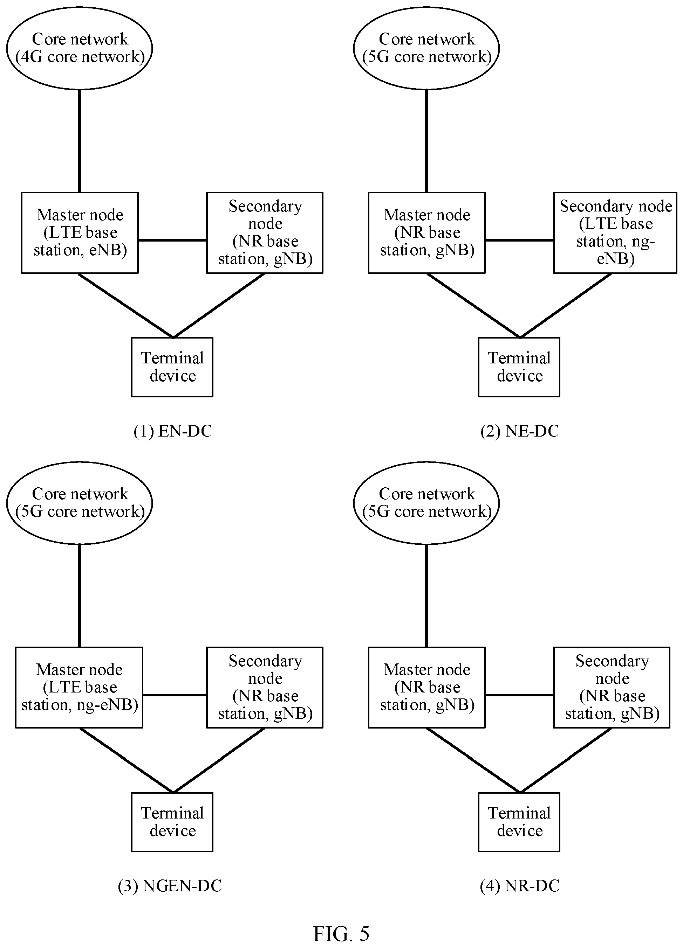

In an actual application scenario, there are a plurality of DC modes. For example, during evolution from the 4G communication system to the 5G communication system, an access network and a core network may be separated and mixed to form a plurality of network deployment options. Specific deployment modes may include but are not limited to the four modes in FIG. 5: (1) EN-DC. (2) NE-DC, (3) NGEN-DC, and (4) NR-DC. In the names of the four deployment modes, "E" represents a 4G access network (namely, an evolved universal mobile telecommunication system (universal mobile telecommunication system, UMTS) terrestrial radio access network, evolved-UMTS terrestrial radio access network, E-UTRAN), and indicates that a terminal device accesses a base station (eNB) in the 4G access network, "N" represents a 5G access network (a new radio (new radio, NR) system), and indicates that a terminal device accesses a base station (gNB) in the 5G access network, and "NG" is a next generation core (next generation core), and represents a 5G core network.

The base station in the 4G access network may also be referred to as an LTE base station, or a 4G base station, namely, an eNB. The base station in the 5G access network may also be referred to as an NR base station, or a 5G base station, namely, a gNB.

Refer to FIG. 5.

In EN-DC, a master node connected to a 4G core network (namely, an EPC) is an LTE base station (namely, an eNB), and a secondary node is an NR base station (namely, a gNB).

In NGEN-DC, a master node connected to a 5G core network (namely, a 5GC) is an LTE base station (namely, a ng-eNB), and a secondary node is an NR base station (namely, a gNB).

In NE-DC, a master node connected to a 5G core network (namely, a 5GC) is an NR base station (namely, a gNB), and a secondary node is an LTE base station (namely, a ng-eNB).

In NR-DC, a master node connected to a 5G core network (namely, a 5GC) is an NR base station (namely, a gNB), and a secondary node is an NR base station (namely, a gNB).

For a terminal device in DC, a user plane of a secondary node may be connected to a core network connected to a master node (that is, the core network may directly send data to the terminal device through the secondary node).

EN-DC is sometimes referred to as non-standalone (non-standalone, NSA) networking, because in an initial phase of 5G, a terminal device in an EN-DC network cannot camp on an NR cell. An NR base station on which UE can camp is sometimes referred to as an SANR base station.

In MR-DC, a master node has a primary cell (Primary Cell, Pcell), and a secondary node has a primary secondary cell (Primary Secondary Cell, PSCell). The primary cell is a cell that is deployed at a dominant frequency and that is indicated as a primary cell in an initial connection establishment procedure or a connection reestablishment procedure initiated by a terminal device, or in a handover procedure. The primary secondary cell is a cell in which a terminal device initiates a random access procedure on a secondary node, a cell in which a terminal device skips a random access procedure and initiates data transmission in a secondary node change procedure, or a cell of a secondary node in which a terminal device initiates random access in a synchronous reconfiguration procedure.

In a DC scenario, when a base station supports a carrier aggregation (Carrier Aggregation, CA) technology, a terminal device may receive services of a plurality of cells served by one base station. The carrier aggregation technology specifically means that a plurality of carriers (cells) are configured for a single terminal device for joint data transmission, to support high-speed data transmission.

The following describes some terms in the DC scenario that supports the CA technology.

A master cell group (master cell group, MCG) is a serving cell group provided by a master node for a terminal device.

A secondary cell group (Secondary Cell Group, SCG) is a serving cell group provided by a secondary node for a terminal device.

A primary cell (primary cell, PCell) belongs to the MCG and is a cell operating on a primary component carrier. For example, a terminal device performs an initial connection establishment procedure or starts a connection reestablishment procedure in the cell. For another example, in a handover procedure, the cell is indicated as a primary cell.

A primary secondary cell (primary secondary cell, PSCell) is a cell in the SCG, and is a cell in which a terminal device is indicated to perform random access or initial physical uplink shared channel (physical uplink shared channel, PUSCH) transmission (for example, the terminal device skips a random access procedure in an SCG change procedure).

A secondary cell (secondary cell, SCell) is a cell operating on a secondary component carrier. Once an RRC connection of a terminal device is established, the secondary cell may be configured to provide an additional radio resource. In addition, it should be noted that in a DC architecture, a cell other than a PCell in the MCG and the SCG may be referred to as an SCell.

Serving cell (Serving Cell): For a terminal device in an RRC connected (RRC_CONNECTED) state, if CA/DC is not configured, there is only one serving cell, that is, a PCell. If CA/DC is configured, a serving cell set includes a PCell and an SCell. Each component carrier (component carrier, CC) corresponds to one independent cell. A terminal device for which CA/DC is configured is connected to one PCell and a maximum of 31 SCells. The PCell and all the SCells of the terminal device form a serving cell set of the terminal device UE. A serving cell may be a PCell or an SCell.

It should be noted that an MCG and an SCG each include at least one cell. When the MCG has only one cell, the cell is a primary cell (namely, a PCell) of the terminal device. When the SCG has only one cell, the cell is a primary secondary cell (namely, a PSCell) of the terminal device. To normalize various nouns in NR, the PCell and the PSCell are collectively referred to as special cells (Special Cell, SpCell). When the MCG or the SCG has a plurality of cells, a cell other than the SpCell is referred to as a secondary cell (namely, an SCell). In this case, carrier aggregation is performed on the SCell and the SpCell in the MCG or the SCG, to jointly provide a transmission resource for the terminal device.

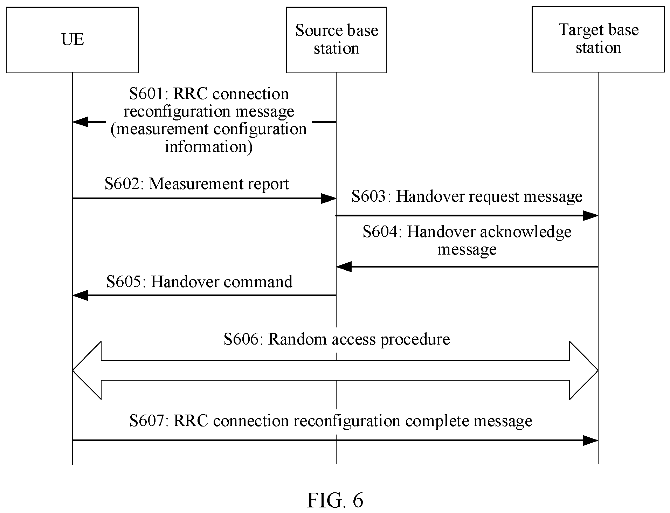

Before the communication method provided in embodiments of this application is described, some procedures in the mobile communication systems shown in FIG. 1 and FIG. 3 are first described.
(1) Conventional cell handover (handover) procedure applicable to the mobile communication system shown in FIG. 1:
   The following describes the cell handover procedure with reference to a flowchart shown in FIG. 6.

S601: In the mobile communication system shown in FIG. 1, when UE is in an RRC connected state, a source base station sends an RRC connection reconfiguration message (for example, RRC Reconfiguration) to the UE. The RRC connection reconfiguration message includes measurement configuration information. The measurement configuration information is used to perform cell measurement (that is, radio resource management (radio resource management, RRM) measurement) on the UE.

Optionally, the measurement configuration information may indicate parameters such as a measurement object, a measurement report configuration, and a measurement identifier of the UE.

S602: After performing cell measurement based on the RRC connection reconfiguration message received in S601, the UE generates a measurement report, and reports the measurement report to the source base station.

S603: After receiving the measurement report reported by the UE, the source base station determines, based on signal quality of each cell in the measurement report, whether the UE is to perform a cell handover; if a cell handover is to be performed, the source base station sends a handover request message (for example, Handover Request) to a target base station to which a target cell belongs.

The target cell is determined by the source base station based on the measurement report.

S604: After receiving the handover request message, the target base station determines whether to allow access of the UE, and sends a handover acknowledge message (for example, Handover Request Acknowledge) to the source base station if access of the UE is allowed.

The handover acknowledge message may include parameters such as a new cell radio network temporary identifier (Cell Radio Network Temporary Identifier, C-RNTI), and a security related algorithm of the target base station allocated by the target base station to the UE.

S605: After receiving the handover acknowledge message sent by the target base station, the source base station sends a handover command to the UE. The handover command may include the handover acknowledge message transmitted in S604, and the source base station does not read the handover acknowledge message, but directly forwards the handover acknowledge message to the UE.

Optionally, the handover command may include information about the target cell and a related configuration parameter required for the UE to access the target cell, so that the UE can randomly access the target base station. For example, the information about the target cell may be at least one of the following: a physical cell identifier (physical cell identifier, PCI) of the target cell, frequency information of the target cell (for example, a frequency corresponding to the target cell), the C-RNTI allocated by the target cell to the UE, and information about a random access channel (random access channel, RACH) resource required for accessing the target cell.

S606: The UE initiates random access to the target base station based on the handover command.

In an existing handover procedure, the UE disconnects from the source base station, and a temporary interruption occurs when the UE receives and sends data before the UE successfully accesses the target base station.

S607: After the UE successfully accesses the target base station, the UE sends an RRC connection reconfiguration complete message (for example, RRC Reconfiguration Complete) to the target base station.

(2) Conditional handover (conditional handover, CHO) mechanism applicable to the mobile communication system shown in FIG. 1:

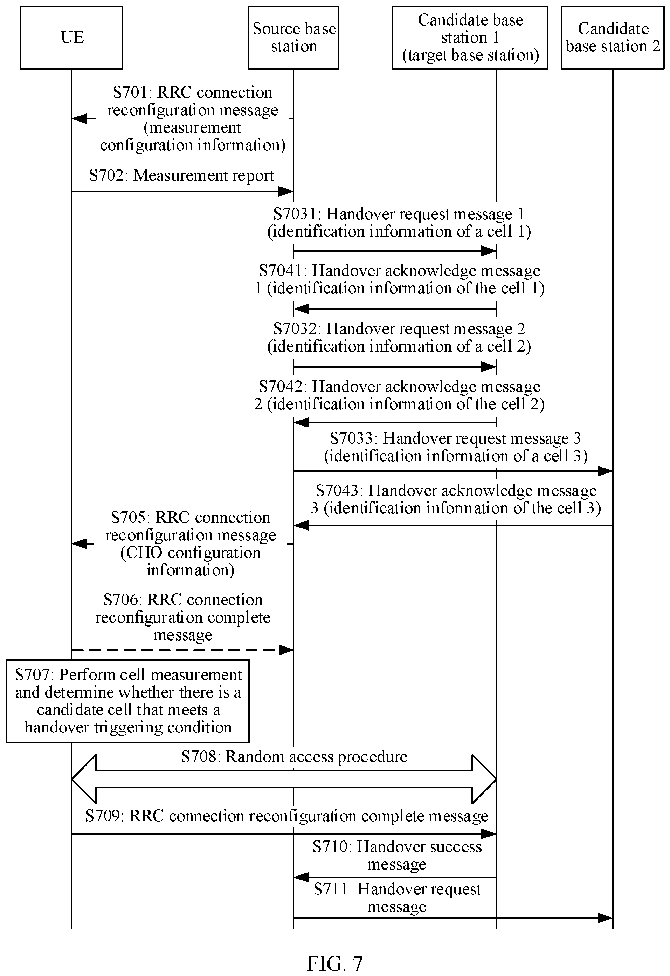

The following describes a CHO procedure with reference to a flowchart shown in FIG. 7.

S701 and S702 are the same as S601 and S602 in the conventional cell handover procedure shown in FIG. 6, and details are not described herein again.

After S702, a source base station determines at least one first candidate cell based on a measurement report reported by UE. Then, the source base station sends, to a candidate base station that to which each first candidate cell belongs, a handover request message (for example, Handover Request) that carries identification information of the first candidate cell. Any handover request message sent to any candidate base station includes identification information of one first candidate cell.

Each time after receiving the handover request message that includes the identification information of the first candidate cell, each candidate base station determines whether to allow the UE to access the first candidate cell (that is, handover admission), and if access of the UE is allowed, feeds back a handover acknowledge message (for example, Handover Request Acknowledge) that includes configuration information of the first candidate cell to the source base station.

The following assumes that the source base station determines three first candidate cells: a cell 1, a cell 2, and a cell 3. The cell 1 and the cell 2 belong to a candidate base station 1, and the cell 3 belongs to a candidate base station 2. In this case, this procedure may include steps S7031 to S7043.

S7031: The source base station sends a handover request message 1 to the candidate base station 1. The handover request message 1 carries identification information of the cell 1.

S7041: The candidate base station 1 allows the UE to access the cell 1, and allocates, to the UE, a radio air interface resource 1 corresponding to the cell 1. Then, the candidate base station 1 feeds back a handover acknowledge message 1 to the source base station. The handover acknowledge message 1 includes the identification information of the cell 1 and resource configuration information 1 that indicates the radio air interface resource 1.

S7032: The source base station sends a handover request message 2 to the candidate base station 1. The handover request message 2 carries identification information of the cell 2.

S7042: The candidate base station 1 allows the UE to access the cell 2, and allocates, to the UE, a radio air interface resource 2 corresponding to the cell 2. Then, the candidate base station 1 feeds back a handover acknowledge message 2 to the source base station. The handover acknowledge message 2 includes the identification information of the cell 2 and resource configuration information 2 that indicates the radio air interface resource 2.

S7033: The source base station sends a handover request message 3 to the candidate base station 2. The handover request message 3 carries identification information of the cell 3.

S7043: The candidate base station 2 allows the UE to access the cell 3, and allocates, to the UE, a radio air interface resource 3 corresponding to the cell 3. The candidate base station 2 feeds back a handover acknowledge message 3 to the source base station. The handover acknowledge message 3 includes the identification information of the cell 3 and resource configuration information 3 that indicates the radio air interface resource 3.

According to steps S7031 to S7043, the source base station can determine a candidate cell that each candidate base station allows the UE to access, and a radio air interface resource corresponding to each candidate cell.

S705: The source base station sends an RRC reconfiguration message to the UE. The RRC reconfiguration message includes CHO configuration information. The CHO configuration information may include identification information of at least one second candidate cell, a handover triggering condition of the at least one second candidate cell, measurement configuration information corresponding to the at least one second candidate cell, and resource configuration information that indicates a radio air interface resource corresponding to each second candidate cell.

The at least one second candidate cell includes the candidate cell that each candidate base station allows the UE to access. In addition, the at least one first candidate cell determined by the source base station includes the at least one second candidate cell.

Optionally, in this application, the identification information of the at least one first candidate cell and the identification information of the at least one second candidate cell may be represented in a form of a list or a set.

S706: Optionally, after receiving the CHO configuration information, the UE sends an RRC reconfiguration complete message (for example, RRC Reconfiguration Complete) to the source base station.

S707: The UE performs measurement based on the received measurement configuration message, and continuously determines, based on the CHO configuration information, whether a candidate cell in the second candidate cell meets a handover triggering condition.

S708: When the UE detects that one candidate cell in the second candidate cell meets the handover triggering condition (that is, CHO is triggered), it is assumed that the cell 1 meets the handover triggering condition (that is, the cell 1 is a target handover, and the candidate base station 1 is a target base station), and the UE initiates a random access procedure to the candidate base station 1 to which the cell 1 belongs, and establishes an RRC connection.

S709: After the UE successfully accesses the target base station, the UE sends an RRC connection reconfiguration complete message to the candidate base station 1.

S710: The candidate base station 1 sends a handover success message to the source base station, to notify the source base station that the UE has successfully accessed the candidate base station 1.

S711: The source base station sends a handover cancel message to other candidate base stations (that is, the candidate base station 2), to indicate these candidate base stations to release radio air interface resources allocated to the UE.

(3) Classic (classic) PSCell addition or change (PSCell addition/change, PAC) procedure applicable to the mobile communication system shown in FIG. 3: A PSCell is managed by a secondary node, and PSCell addition or change causes SCG addition or change. Therefore, PSCell addition or change may be equivalent to secondary node addition or change or SCG addition or change.

When UE is in single connectivity (only one base station in the mobile communication system serves the UE, and no PSCell is configured), a network side may trigger a PSCell addition (PSCell addition, PA) procedure. In this procedure, the network side may indicate one target PSCell to the UE, and the UE adds the target PSCell. That is, the network side configures DC for the UE. It should be noted that the PSCell addition procedure can be triggered only by a master node.

When a PSCell has been configured for the UE, the network side may trigger a PSCell change (PSCell change, PC) procedure due to mobility of the UE. It should be noted that the PSCell change procedure may be triggered by the master node or a source secondary node. In this procedure, the network side may indicate a target PSCell cell to the UE, and the UE is handed over from a source PSCell to the target PSCell.

### PSCell addition procedure:

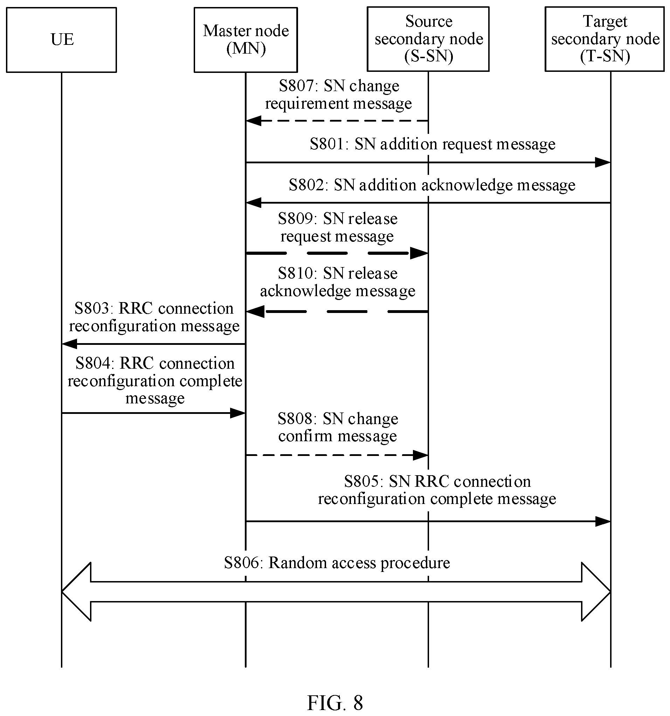

The following describes the PSCell addition procedure with reference to S801 to S806 (steps with black solid lines in FIG. 8) in FIG. 8.

S801: After determining a target PSCell, an MN sends an SN addition request message (for example, SN Addition Request) to a target secondary node (target SN, subsequently denoted as a T-SN) to which the target PSCell belongs.

Optionally, the target PSCell may be determined by the MN based on a measurement report reported by UE. The SN addition request message includes identification information of the target PSCell.

S802: After receiving the SN addition request message, the T-SN determines that access of the UE is allowed, and sends an SN addition acknowledge message (for example, SN addition Request Acknowledge) to the MN.

The SN addition acknowledge message may carry information about a target SCG configured by the target SN for the UE. The information about the target SCG includes the identification information of the target PSCell.

S803: The MN sends an RRC connection reconfiguration message (for example, RRC Reconfiguration) to the UE.

The RRC connection reconfiguration message may include an SN/SCG addition command, and the SN/SCG command carries the information about the target SCG.

S804: Optionally, after receiving the RRC connection reconfiguration message in S803, the UE may send an RRC reconfiguration complete message (for example, RRC Reconfiguration Complete) to the MN.

S805: The MN sends an SN RRC reconfiguration complete message (SN RRC Reconfiguration Complete) to the T-SN.

S806: The UE initiates a random access procedure to the T-SN, to request to access the target PSCell.

The PSCell change procedure may be triggered by the MN or may be trigger by the SN. As shown in FIG. 8, a PSCell change procedure triggered by the SN includes steps S801 to S806 (steps with black solid lines in FIG. 8), and S807 and S808 (steps with thin dashed lines in FIG. 8). APSCell change procedure triggered by the MN includes steps S801 to S806 (steps with black solid lines in FIG. 8), and S809 and S810 (steps with thick dashed lines in FIG. 8).

PSCell change procedure triggered by a source SN (source-SN, subsequently denoted as S-SN):
S807: When the S-SN triggers a PSCell change, the S-SN needs to send an SN change requirement message (for example, SN Change Required) to the MN.

Optionally, the SN change requirement message may include the identification information of the target PSCell determined by the T-SN. Optionally, the target PSCell may be determined by the S-SN based on a measurement report reported by UE.

S801: After receiving the SN change requirement message, the MN sends an SN addition request message to a T-SN to which a target PSCell belongs.

S802 to S806 in the PSCell change procedure triggered by the S-SN are the same as S802 to S806 in the PSCell addition procedure, and details are not described herein again.

A difference is that, after S803 or S804, the PSCell change procedure triggered by the S-SN further includes S808.

S808: The MN sends an SN change confirm message (for example, SN Change Confirm) to the S-SN, to notify the S-SN that the PSCell of the UE is changed, so that the S-SN stops data transmission with the UE.

PSCell change procedure triggered by the MN:
S801 to S806 in the PSCell change procedure triggered by the MN are the same as S801 to S806 in the PSCell addition procedure, and details are not described herein again.
   A difference is that, the PSCell change procedure triggered by the MN further includes S809 and S810 between S802 and S803.
S809: The MN sends an SN release request message (for example, an SN Release Request) to the S-SN. The SN release request message indicates the S-SN to release a resource allocated to the UE, and stop data transmission with the UE.
S810: After releasing the resource allocated to the UE, the S-SN sends an SN release acknowledge message (for example, SN Release Request Acknowledge) to the MN.

It should be noted that, in the PAC procedure shown in FIG. 8, a sequence of performing S804 of sending the RRC connection reconfiguration complete message and performing S806 of randomly accessing the target PSCell by the UE is not limited, and is determined based on implementation of the UE.

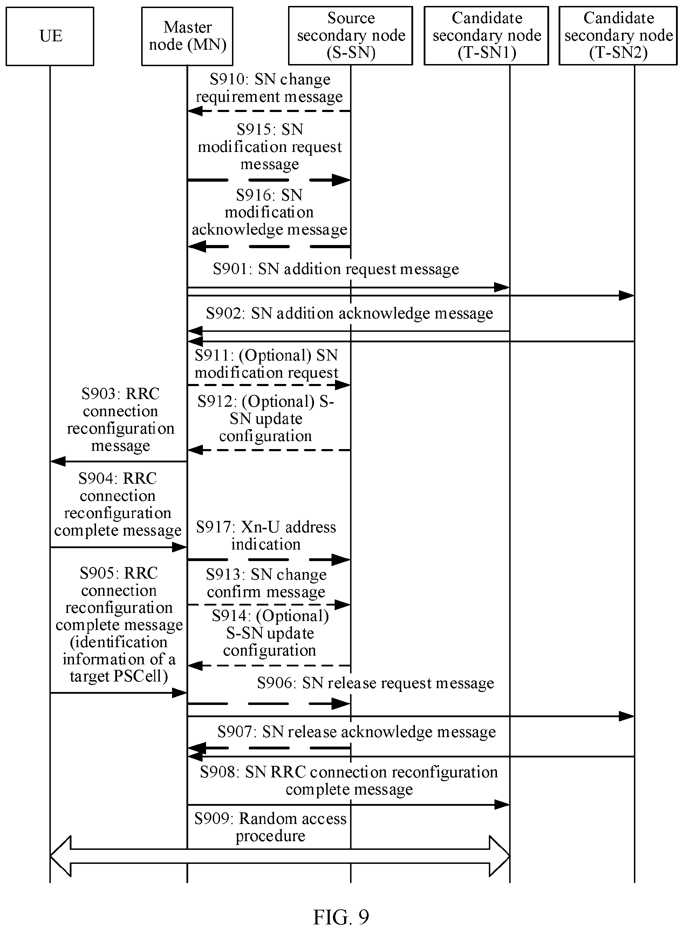

(4) Conditional PSCell addition or change (conditional PSCell addition/change, CPAC) mechanism applicable to the mobile communication system shown in FIG. 3: For a specific procedure of CPAC, refer to FIG. 9.

To improve a success rate of PSCell addition or change, the CPAC mechanism is introduced in the communication field. In the CPAC mechanism, a triggering node (MN/SN) on a network side prepares a plurality of candidate PSCells in advance, and the network side sends CPAC configuration information to UE. The CPAC configuration information includes identification information of the plurality of candidate PSCells, configuration information of a radio air interface resource corresponding to each candidate cell, an execution triggering condition, measurement configuration information, and the like. After the UE receives the CAPC configuration information, if the UE finds that signal quality of a candidate PSCell meets the execution triggering condition, the UE uses the candidate PSCell as a target PSCell and performs random access, to perform a PSCell addition or change procedure. In the conventional PAC procedure in (3), the network side configures one target PSCell for the UE, while in this CPAC procedure, the network side may configure a plurality of candidate PSCells for the UE, and the UE may use the candidate PSCell that meets the execution triggering condition as the target PSCell. After the UE successfully executes the conditional PSCell addition (conditional PSCell addition, CPA)/(conditional PSCell change, CPC), the UE releases saved CPAC configuration information.

The following describes the CPA procedure in detail with reference to steps S901 to S909 (steps with black solid lines in FIG. 8) in FIG. 9.

When a PSCell is not configured for the UE (that is, this procedure does not involve a source secondary node (S-SN)), the network side triggers a PSCell addition procedure, that is, configures DC for the UE.

S901: An MN determines a plurality of first candidate PSCells, and sends an SN addition request message (for example, SN Addition Request) to each of at least one candidate secondary node (a T-SN1 and a T-SN2 are used as examples).

The SN addition request message sent to any candidate secondary node includes a CPAC indication, and may further include identification information of at least one first candidate PSCell to which the candidate secondary node belongs, a maximum quantity M of candidate PSCells that can be accepted (Accept) by the candidate secondary node, and a latest measurement result (denoted as a first measurement result) reported by the UE.

Optionally, the MN may determine a plurality of first candidate PSCells based on the first measurement result.

S902: After receiving the SN addition request message, each candidate secondary node determines whether access of the UE is allowed, and if access of the UE is allowed, determines, in at least one first candidate PSCell to which the candidate secondary node belongs, at least one second candidate PSCell accepted by the candidate secondary node. Then, the candidate secondary node feeds back an SN addition acknowledge message (for example, SN addition Request Acknowledge) to the MN through an SN, and reserves a radio air interface resource for the UE until an SN release message from the MN is received (that is, S906).

It should be noted that a quantity of at least one second candidate PSCell accepted by each candidate secondary node is less than or equal to the maximum quantity M of candidate PSCells that can be accepted (Accept) by the candidate secondary node.

The SN addition acknowledge message sent by any candidate secondary node not only includes the at least one second candidate PSCell accepted by the candidate secondary node, but also may include radio air interface resource information that corresponds to each second candidate PSCell and that is reserved by the candidate secondary node for the UE, for access by the UE. The radio air interface resource information corresponding to the second candidate PSCell includes SCG configuration information corresponding to the second candidate PSCell, and may further include MCG configuration information corresponding to the candidate PSCell.

Optionally, each candidate secondary node may prepare the SCG configuration information corresponding to each second candidate PSCell based on SCG configuration information included in the SN addition request message in S901 by using an RRC configuration type of delta configuration (delta config). If the SN addition request message in S901 does not provide the SCG configuration information, the SCG configuration information corresponding to each second candidate PSCell is prepared by using an RRC configuration type of full configuration (full config).

Optionally, any candidate secondary node may determine, based on the first measurement result, connection and load statuses of each cell, and the like, the at least one second candidate PSCell accepted by the candidate secondary node.

S903: After receiving the SN addition acknowledge message of the at least one candidate secondary node, the MN sends an RRC connection reconfiguration message (for example, RRC Reconfiguration) to the UE. The RRC connection reconfiguration message includes the CPA configuration information.

The CPA configuration information may include an execution triggering condition, identification information of at least one third candidate PSCell, resource configuration information that indicates a radio air interface resource corresponding to each third candidate PSCell, and the like.

Optionally, the CPA configuration information may further include measurement configuration information.

S904: The UE sends an RRC connection reconfiguration complete message (for example, RRC Reconfiguration Complete) to the MN.

It should be noted that, in this case, the UE does not immediately add any candidate PSCell, but the UE continuously performs measurement and determines whether a third candidate PSCell meets the execution triggering condition.

S905: When the UE detects that one third candidate PSCell meets the execution triggering condition, the UE may use the third candidate PSCell as a target PSCell, and the UE sends an RRC reconfiguration complete message to the MN. The RRC reconfiguration complete message includes identification information of the target PSCell, to notify the MN that the UE selects the target PSCell.

S906: The MN sends an SN release request message (for example, SN Release Request) to a candidate secondary node (that is, T-SN2) other than a candidate secondary node (that is, a target secondary node, where the T-SN1 is used as an example) that manages the target PSCell, to indicate the candidate secondary node to release a radio air interface resource and buffered data that are reserved for the UE.

S907: The another candidate secondary node (that is, the T-SN2) sends an SN release acknowledge message (for example, SN Release Request Acknowledge) to the MN.

S908: The MN sends an SN RRC reconfiguration complete message (SN RRC Reconfiguration Complete) to the target secondary node (T-SN1) that manages the target PSCell.

S909: The UE initiates a random access procedure to the selected target PSCell, to request to access the target PSCell.

Similar to a conventional PSCell change procedure, when DC has been configured for the UE (that is, an SN exists), the CPC procedure may be triggered by the MN, or may be triggered by the SN. As shown in FIG. 9, a CPC procedure triggered by the SN includes steps S901 to S909 (steps with black solid lines in FIG. 9), and S910 to S914 (steps with thin dashed lines in FIG. 9). A CPC procedure triggered by the MN includes steps S901 to S909 (steps with black solid lines in FIG. 9), S915 and S916 (steps with thick dashed lines in FIG. 9), and steps related to the S-SN in S906 and S907.

CPC procedure triggered by the S-SN:
S910: The S-SN determines a plurality of first candidate PSCells for the UE, and sends an SN change requirement message (for example, SN Change Required) to the MN.

The SN change requirement message may include identification information of the plurality of first candidate PSCells (or identification information of at least one first candidate PSCell served by each candidate secondary node), and may further carry at least one of the following: a maximum quantity M of candidate PSCells that can be accepted (Accept) by each candidate secondary node, a latest measurement result (denoted as a first measurement result) reported by the UE, an execution triggering condition, measurement configuration information, SCG configuration information (to support delta configuration), and the like.

S901: After receiving the SN change requirement message, the MN sends an SN addition request message to each of at least one candidate secondary node (a T-SN1 and a T-SN2 are used as examples).

The SN addition request message sent to any candidate secondary node includes a CPAC indication, and may further include identification information of at least one first candidate PSCell to which the candidate secondary node belongs, a maximum quantity M of candidate PSCells that can be accepted (Accept) by the candidate secondary node, and the first measurement result.

S902 is the same as S902 in the CPA procedure.

S911: Optionally, before performing S903, the MN may send an SN modification request message (SN Modification Request) to the S-SN, to notify the S-SN of at least one second PSCell (that is, the at least one third candidate PSCell in S903) accepted by each candidate secondary node.

S912: Optionally, the source SN may update a configuration to the MN, and may provide updated measurement configuration information and/or an updated execution triggering condition for the MN.

S903 and S904 are similar to S903 and S904 in the CPA procedure, and a difference lies in that the RRC connection reconfiguration message sent by the MN to the UE in S903 includes CPC configuration information. For content included in the CPC configuration information, refer to the CPA configuration information. Details are not described herein again.

S913: The MN sends an SN change confirm message (for example, SN Change Confirm) to the S-SN, to notify the S-SN that the MN has sent the CPC configuration information to the UE, so that the S-SN starts early data forwarding.

Optionally, when the MN skips S911, the MN may further include, in the SN change confirm message, the identification information of the at least one second PSCell (that is, the at least one third candidate PSCell in S903) accepted by each candidate secondary node.

S914: Optionally, the same as S912, the S-SN may update a configuration to the MN, and may provide updated measurement configuration information and/or an updated execution triggering condition for the MN. In this case, the MN executes S903 and S904 again, to send latest CPC configuration information to the UE.

S905 to S909 are the same as S905 to S909 in the CPA procedure, and details are not described herein again.

CPC procedure triggered by the MN:
S915: When triggering the CPC procedure, the MN sends an SN modification request message (for example, SN modification Request) to the S-SN, to notify the S-SN that a PSCell of the UE is to be changed.
S916: The S-SN sends an SN modification acknowledge message (for example, SN modification Request Acknowledge) to the MN.

S901 and S902 are the same as S901 and S902 in the CPA procedure, and details are not described herein again.

S903 and S904 are the same as S903 and S904 in the CPC procedure triggered by the S-SN, and details are not described herein again.

S917: The MN sends an Xn-U address indication (for example, Xn-U address indication) to the S-SN, to notify the S-SN that the MN has sent CPC configuration information to the UE, so that the S-SN starts early data forwarding.

Optionally, the Xn-U address indication may further include identification information of at least one second PSCell (that is, the at least one third candidate PSCell in S903) accepted by each candidate secondary node.

S905 to S909 are similar to S905 to S909 in the CPA procedure. For same parts, refer to each other. Details are not described herein again. A difference is that in S906 and S907, after receiving the RRC reconfiguration complete message that includes the identification information of the target PSCell and that is sent by the UE in S905, the MN not only sends an SN release request message to a candidate secondary node other than the target secondary node (T-SN1), but also may send an SN release request message to the S-SN. Correspondingly, the S-SN also sends an SN release acknowledge message to the MN.

It should be noted that, in the foregoing CPAC procedures, a sequence of sending the RRC reconfiguration complete message by the UE (S905) and randomly accessing the target PSCell (S909) is not limited, and the UE may determine the sequence based on specific implementation.

In addition, in the foregoing procedures, the plurality of first candidate PSCells or at least one first candidate PSCell, at least one second candidate PSCell, at least one third candidate PSCell, and the like may all be represented in a form of a cell set or a cell list.

Regardless of the conventional PAC procedure shown in FIG. 8 or the CPAC procedure shown in FIG. 9, an SCG failure may occur on the UE. Currently, to discuss a problem of a PSCell moving failure in the PAC procedure, a mobility robustness optimization (mobility robustness optimization, MRO) mechanism in DC is introduced in the communication field.

In the DC-based MRO mechanism, SCG failure information (SCG Failure Information) is introduced. The SCG failure information is used to record PSCell mobility related information. When an SCG failure occurs, the UE records and reports SCG failure information to a network side, and the network side performs autonomous analysis and optimizes a configuration parameter based on the SCG failure information.

In a scenario in which a mobile communication system supports the conventional PAC procedure, after the UE detects the SCG failure, if a connection to the MN is normal, the UE sends first SCG failure information to the MN, and the MN performs initial cause analysis (initial analysis) to identify a node that causes the failure. If a failure node is caused by an SN, the MN sends second SCG failure information to the SN, and the SN performs final root cause analysis (root cause analysis).

However, because selection of a candidate PSCell is not involved in the conventional PAC procedure, the foregoing MRO mechanism cannot perform cause analysis on an SCG failure in the CPAC scenario.

The following describes some concepts in cause analysis on the SCG failure.

The first SCG failure information reported by the UE may include but is not limited to at least one of the following:
a1. SCG failure type (failureType): for example, T310 expiry, a random access problem, or reaching a maximum quantity of RLC retransmissions.
a2. Measurement result corresponding to an MCG measurement configuration (measResultFreqList): an available measurement result corresponding to measurement configuration information configured by an MCG (MN) for the UE.
a3. Measurement result corresponding to an SCG measurement configuration (measResultSCG-Failure): an available measurement result corresponding to measurement configuration information configured by an SCG (source S-SN) for the UE.
a4. Information about a source PSCell cell (previousPSCellId): information about a source PSCell cell in a previous PSCell change procedure.
a5. Information about a failed PSCell cell (failedPSCellId): identification information of a PSCell cell in which an SCG failure is detected, or information about a failed target PSCell in a previous PSCell addition or change procedure.
a6. SCG failure time (timeSCGFailure): time elapsed since last execution of RRCReconfiguration with reconfiguration WithSync for an SCG until an SCG failure. Execution of RRCReconfiguration with reconfigurationWithSync for the SCG is used for SCG (PSCell) addition/change.
a7. Random access information list (perRAInfoList): If the SCG failure type (failureType) is a random access problem and a timer T304 is running, perRAInfoList is set to indicate random access related information, and provide detailed information about each of random access attempts in a chronological order of the random access attempts, for example, an index of an SSB/CSI-RS beam for an attempt, indication information indicating whether signal quality of an SSB beam is greater than a quality threshold, indication information indicating fallback from 2-step to 4-step, a quantity of attempts on a beam, and indication information indicating whether contention is detected.

The second SCG failure information sent by the MN to the SN may include some or all content of the first SCG failure information received by the MN from the UE. The second SCG failure information includes at least one of the following:
b1. SCG failure type (failureType).
b2. Measurement result corresponding to the SCG measurement configuration (measResultSCG-Failure).

Optionally, the second SCG failure information may further include at least one of the following:
b3. Identification information of the source PSCell cell (previousPSCellId).
b4. Identification information of the failed PSCell cell (failedPSCellId).
b5. SCG failure time (timeSCGFailure).
b6. Random access information list (perRAInfoList).

Information about a cell (for example, a source PSCell or a failed PSCell) may include: identification information of the cell, and/or signal quality corresponding to the cell. A measurement result may include signal quality corresponding to a cell.

The identification information of the cell may be at least one of the following:
a cell global identifier (cell global identifier, CGI), a physical cell identifier (physical cell identifier, PCI) and a frequency, a physical cell identifier (physical cell identifier, PCI), a cell identifier (cell identifier, cell ID), a non-public network identifier (non-public network identifier, NPN ID), a non-terrestrial network identifier (non-terrestrial network identifier, NTN ID), or another cell identifier of the cell. The CGI may include a public land mobile network identifier (public land mobile network identifier, PLMN ID) and a cell ID.

The signal quality corresponding to the cell may include cell signal quality and/or signal quality of at least one beam that belongs to the cell. The signal quality includes at least one of the following: reference signal received power (reference signal receiving power, RSRP), reference signal received quality (reference signal receiving quality, RSRQ), or a signal to interference plus noise ratio (signal to interference plus noise ratio, SINR). The signal quality may be a measurement result obtained based on measurement of a reference signal (for example, a synchronization signal block (synchronization signaling block, SSB) and/or a channel state information-reference signal (channel state information-reference signal, CSI-RS)).

For SCG failure scenarios in CPAC, specific failure types are defined as follows:
Too late CPC execution: An SCG failure occurs after UE has stayed for a long period of time in a PSCell (CPC is not executed). Another suitable PSCell (suitable PSCell) can be found based on a measurement result reported by the UE.

Too early CPC execution: An SCG failure occurs shortly after a successful PSCell change of UE from a source PSCell to a target PSCell or a PSCell change failure occurs in a PSCell change procedure. The source PSCell is still a suitable PSCell based on the measurement result reported by the UE

CPA execution to wrong cell: The UE receives CPA configuration information, an execution triggering condition is met, and CPA execution fails or an SCG failure occurs shortly after successful CPA execution. A suitable PSCell different from the target PSCell can be found based on the measurement result reported by the UE.

CPC execution to wrong cell: The UE receives CPC configuration information, an execution triggering condition is met, and CPC execution fails or an SCG failure occurs shortly after successful CPC execution. A suitable PSCell different from the source PSCell or the target PSCell is found based on the measurement result reported by the UE.

Optionally, a definition condition may be further added for CPA execution to wrong cell: the suitable PSCell is not in at least one candidate PSCell configured by the CPA configuration information. A definition condition may be also added for CPC execution to wrong cell: the suitable PSCell is not in at least one candidate PSCell configured by the CPC configuration information.

Successful CPA or CPC execution means that the UE successfully randomly accesses the target PSCell.

The suitable PSCell may meet at least one of the following conditions:
c1: a cell that meets a cell selection criterion and on which the UE can camp;
c2: a PLMN of the cell is a public land mobile network (public land mobile network, PLMN) PLMN, a registered PLMN, or an equivalent PLMN specified by NAS;
c3: the cell is not barred, not reserved, and is not in a tracking area in which roaming is forbidden; and
c4: operating at an SCG frequency.

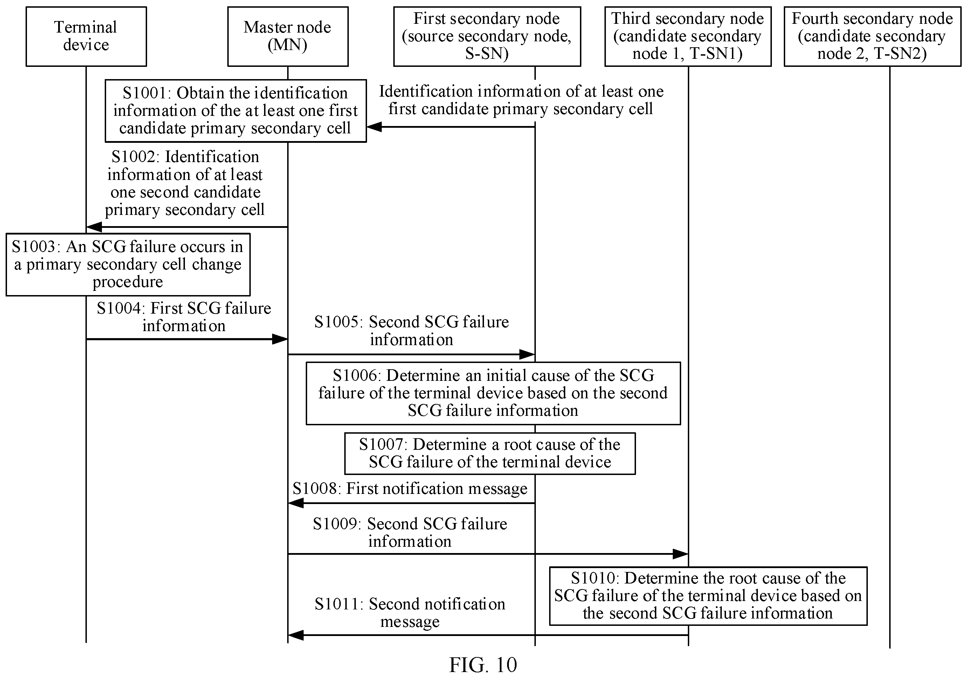

To implement cause analysis on an SCG failure of a terminal device in a CPAC scenario, embodiments of this application provide the following embodiments. The embodiments are applicable to the mobile communication system that supports a DC technology shown in FIG. 3. The following describes each embodiment in detail with reference to a corresponding flowchart. Before the embodiments are described, general concepts related to the embodiments shown in FIG. 10 to FIG. 12 are first described.

At least one first candidate primary secondary cell is a candidate primary secondary cell initially configured by a CPAC triggering node (a master node or a source secondary node) for the UE, that is, a candidate primary secondary cell recommended by the triggering node. Optionally, in specific implementation, the at least one first candidate primary secondary cell may be in a form of a list or a set, for example, may be represented as a first candidate primary secondary cell list or a first candidate primary secondary cell set.

At least one second candidate primary secondary cell is a candidate primary secondary cell finally configured by the MN for UE. Optionally, in specific implementation, the at least one second candidate primary secondary cell may be in a form of a list or a set, for example, may be represented as a second candidate primary secondary cell list or a second candidate primary secondary cell set.

At least one third candidate primary secondary cell accepted by each candidate secondary node is a candidate primary secondary cell that is managed by the candidate secondary node and that is allowed to be accessed by the UE. Each candidate secondary node may determine the at least one third candidate primary secondary cell accepted by the candidate secondary node from at least one first candidate primary secondary cell managed by the candidate secondary node. Optionally, in specific implementation, the at least one third candidate primary secondary cell accepted by each candidate secondary node may also be in a form of a list or a set, for example, may be represented as a third candidate primary secondary cell list or a third candidate primary secondary cell set corresponding to each candidate secondary node.

A relationship between the foregoing three items is as follows: The at least one first candidate primary secondary cell includes the at least one second candidate primary secondary cell, and the at least one second candidate primary secondary cell includes the at least one third candidate primary secondary cell accepted by each of the at least one candidate secondary node.

If no primary secondary cell is configured for a terminal device, and the terminal device does not have a first secondary node, the terminal device performs primary secondary cell addition.

The first secondary node is a secondary node to which a source primary secondary cell belongs in a primary secondary cell change procedure performed by the terminal device.

A second secondary node includes at least one candidate secondary node, or the second secondary node includes the at least one candidate secondary node and a first secondary node.

A third secondary node is a secondary node to which a suitable primary secondary cell belongs.

A fourth secondary node is any second secondary node. For illustrative purposes, in the accompanying drawings corresponding to the embodiments, it is assumed that the fourth secondary node is a candidate secondary node other than the first secondary node and the third secondary node in the second secondary node.

A first notification message is sent by the first secondary node to the master node. The first notification message includes first indication information, and the first indication information indicates that an SCG failure of the terminal device is not caused by the first secondary node, or indicates that the SCG failure of the terminal device is caused by the third secondary node.

A second notification message is sent by the third secondary node to the master node. The second notification message includes second indication information, and the second indication information indicates that the SCG failure of the terminal device is not caused by the third secondary node.

A third notification message is sent by the fourth secondary node to the master node. The third notification message includes third indication information, and the third indication information indicates that the SCG failure of the terminal device is not caused by the fourth secondary node.

A first measurement result is a first measurement result reported by the UE in a candidate cell preparation phase in a CPAC procedure. The triggering node (the master node or the first secondary node) may select the at least one first candidate primary secondary cell for the terminal device based on the first measurement result, and a candidate base station that receives a secondary node addition request message may select the at least one second candidate primary secondary cell for the terminal device based on the first measurement result. The first measurement result includes signal quality obtained by the UE by measuring a cell at an SCG frequency.

A second measurement result is a measurement result of a cell available when the UE detects that the SCG failure after receiving a CPAC configuration, or further, signal quality of a cell operating at the SCG frequency. The measurement may be performed based on a measurement configuration configured by an MCG, or may be performed based on a measurement configuration configured by an SCG. After receiving the CPAC configuration, the UE detects that the SCG failure occurs, and first SCG failure information reported to the master node includes the second measurement result.

Embodiment 1: Embodiment 1 is applied to a CPC scenario, and a procedure is shown in FIG. 10. S1001 to S1003 are a conventional CPC procedure. For a specific process, refer to the detailed descriptions of CPC triggered by the S-SN or the MN shown in FIG. 9.

S1001: A master node obtains identification information of at least one first candidate primary secondary cell.

According to different triggering nodes of the CPC procedure, manners of obtaining the identification information of the at least one first candidate primary secondary cell by the master node are also different.

In an implementation, a first secondary node triggers the CPC procedure, selects the at least one first candidate primary secondary cell for a terminal device, and sends the identification information of the at least one candidate primary secondary cell to the master node, as shown in FIG. 10. The master node receives the identification information of the at least one first candidate primary secondary cell from the first secondary node. For example, in the CPC procedure triggered by the S-SN shown in FIG. 9, the first secondary node may determine the at least one first candidate primary secondary cell for the UE by using S910, and include the identification information of the at least one candidate primary secondary cell in the SN change requirement message sent to the master node.

In another implementation, the master node triggers the CPC procedure, and selects the at least one first candidate primary secondary cell for the terminal device, to generate the identification information of the at least one first candidate primary secondary cell. For example, in the CPC procedure triggered by the MN shown in FIG. 9, the master node may select the at least one first candidate primary secondary cell for the terminal device by using S901.

Optionally, in the foregoing two implementations, the first secondary node or the master node may select the at least one first candidate primary secondary cell based on a first measurement result reported by the UE in a candidate cell preparation phase.

S1002: The master node sends identification information of at least one second candidate primary secondary cell to the terminal device.

The at least one first candidate primary secondary cell includes the at least one second candidate primary secondary cell. The at least one second candidate primary secondary cell includes at least one third candidate primary secondary cell accepted by each of at least one candidate secondary node.

For example, in the CPC procedure shown in FIG. 9, after obtaining the identification information of the at least one first candidate primary secondary cell, the master node may determine, by using S901 and S902, the at least one third candidate primary secondary cell accepted by each of the at least one candidate secondary node, to determine the at least one second candidate primary secondary cell. Then, the master node may send the CPC configuration information to the terminal device by using the RRC connection reconfiguration message in S903.

Optionally, the CPC configuration information may not only include the identification information of the at least one second candidate primary secondary cell, but also include an execution triggering condition that indicates resource configuration information of a radio air interface resource, measurement configuration information, and the like corresponding to each second candidate primary secondary cell.

S1003: An SCG failure occurs in a primary secondary cell change procedure performed by the terminal device or shortly after a successful change.

After S1002, the terminal device may continuously perform measurement, and evaluate whether there is a second candidate primary secondary cell that meets the execution triggering condition in the at least one second candidate primary secondary cell. If it is detected that one second candidate primary secondary cell (a target primary secondary cell) meets the execution triggering condition, CPC may be performed. The terminal device performs a procedure of random access to a target base station that manages the target primary secondary cell. When the terminal device fails to perform random access to the target base station or a radio link failure (radio link failure, RLF) occurs shortly (in specified duration) after successful access, the SCG failure occurs.

For example, in the CPC procedure shown in FIG. 9, the terminal device may perform the primary secondary cell change procedure by using S904 to S909.

S1004: After the SCG failure occurs in the primary secondary cell change procedure performed by the terminal device or shortly after a successful change, the terminal device sends first SCG failure information to the master node.

For content included in the first SCG failure information, refer to the foregoing descriptions of the first SCG failure information reported by the UE. Details are not described herein again.

It should be noted that, after the terminal device reports the first SCG failure information, the terminal device does not need to continue to measure the at least one second primary secondary cell to continue to evaluate whether there is a second primary secondary cell that meets the execution triggering condition.

S1005: The master node sends second SCG failure information to the first secondary node. In this application, the second SCG failure information is used to determine a cause of the SCG failure of the terminal device, and the cause of the SCG failure is used to determine a problematic node for wrong candidate primary secondary cell selection.

The second SCG failure information may include some or all content of the first SCG failure information. For details, refer to the foregoing descriptions of the second SCG failure information sent by the MN to the SN. Details are not described herein again.

In some scenarios, for example, in EN-DC, NE-DC, or NGEN-DC, because the master node and the secondary node use different RATs, the master node may not be able to parse a measurement result corresponding to an SCG measurement configuration in the first SCG failure information. If the secondary node triggers CPC, the master node may not configure measurement for the UE. That is, there is no measurement result corresponding to an MCG measurement configuration. In this case, the master node cannot obtain a second measurement result based on the measurement result corresponding to the MCG measurement configuration and the measurement result corresponding to the SCG measurement configuration, and therefore cannot determine a suitable primary secondary cell. As a result, the master node cannot perform cause analysis on the SCG failure of the terminal device. Based on this, the master node may send the second SCG failure information to the first secondary node, and the first secondary node performs cause analysis.

In some other scenarios, for example, in NR-DC, because the master node and the secondary node use a same RAT, the master node may parse the measurement result corresponding to the SCG measurement configuration, and may obtain the second measurement result in the first SCG failure information based on the measurement result corresponding to the SCG measurement configuration and/or the measurement result corresponding to the MCG measurement configuration. In this case, the master node may perform S1005 after determining the suitable primary secondary cell based on the first SCG failure information, and determining that a failure type of the SCG failure of the terminal device is CPC execution to a wrong cell. For a process in which the master node determines that the failure type of the SCG failure of the terminal device is CPC execution to a wrong cell, refer to the foregoing definition of CPC execution to a wrong cell, or refer to a method for identifying the failure type in the conventional technology. Details are not described herein again.

S1006: The first secondary node determines an initial cause of the SCG failure of the terminal device based on the received second SCG failure information. The initial cause is used to analyze a possible problematic node for wrong candidate primary secondary cell selection.

Optionally, before determining the initial cause, the first secondary node may determine, based on the second SCG failure information, that the failure type of the SCG failure of the terminal device is CPC execution to a wrong cell. CPC execution to a wrong cell indicates that a network side configures a wrong candidate primary secondary cell for the UE. For a process in which the first secondary node determines that the failure type of the SCG failure of the terminal device is CPC execution to a wrong cell, refer to the foregoing definition of CPC execution to a wrong cell, or refer to a method for identifying the failure type in the conventional technology. Details are not described herein again. Optionally, the first secondary node may further notify the master node of the failure type.

In an implementation, the first secondary node may determine the initial cause of the SCG failure of the terminal device based on the second SCG failure information in the following steps:
d1: The first secondary node determines a suitable primary secondary cell based on the second SCG failure information.
d2: If the suitable primary secondary cell is not in the at least one first candidate primary secondary cell, the first secondary node determines that the initial cause is that the first secondary node is a problematic node that possibly causes wrong candidate primary secondary cell selection.
d3: If the suitable primary secondary cell is in the at least one first candidate primary secondary cell and is not in at least one third candidate primary secondary cell accepted by a third secondary node, the first secondary node determines that the initial cause is that the third secondary node is a problematic node that possibly causes wrong candidate primary secondary cell selection.

The third secondary node is a secondary node to which the suitable primary secondary cell belongs, and at least one third candidate primary secondary cell accepted by the third secondary node is a candidate primary secondary cell configured by the third secondary node for the UE. For example, in the CPC procedure shown in FIG. 9, the master node may send, to the first secondary node by using S911 and S913, an identifier of the at least one third candidate primary secondary cell accepted by each candidate secondary node.

In this embodiment of this application, after determining the initial cause of the SCG failure of the terminal device, the first secondary node may perform further processing based on the initial cause by using but not limited to the following solutions.

Solution 1: The first secondary node further analyzes a root cause only when the initial cause is related to the first secondary node. Content of this solution is as follows:
When the initial cause is that the third secondary node is a problematic node that possibly causes wrong candidate primary secondary cell selection, the first secondary node may further send a first notification message to the master node by using S1008. The first notification message includes first indication information, and the first indication information indicates that the SCG failure of the terminal device is not caused by the first secondary node, or indicates that the SCG failure of the terminal device is caused by the third secondary node.

When the initial cause is that the first secondary node is a problematic node that possibly causes wrong candidate primary secondary cell selection, the first secondary node may further determine a root cause of the SCG failure of the terminal device by using S1007. A specific process is as follows:
If the suitable primary secondary cell is in a first cell set, the first secondary node determines that the root cause is that the first secondary node is a problematic node that causes wrong candidate primary secondary cell selection. The first cell set includes N cells (working at an SCG frequency) that have best signal quality in the first measurement result. N is a quantity of the at least one first candidate primary secondary cell.

Optionally, if the suitable primary secondary cell is not in the first cell set, it indicates that the first secondary node does not select at least one wrong first candidate primary secondary cell. The SCG failure may occur because the first measurement result and the second measurement result differ greatly (for example, the terminal device moves at a high speed, or radio link quality changes greatly). The first secondary node may further send the first notification message to the master node by using S1008. The first notification message includes first indication information, and the first indication information indicates that the SCG failure of the terminal device is not caused by the first secondary node.

Solution 2: Regardless of whether the initial cause is related to the first secondary node, the first secondary node further analyzes a root cause. Content of this solution is as follows:
When the initial cause is that the third secondary node is a problematic node that possibly causes wrong candidate primary secondary cell selection, the first secondary node determines the root cause of the SCG failure of the terminal device by using S1007. A specific process is as follows:
If the suitable primary secondary cell is in a second cell set, the first secondary node determines that the root cause is that the third secondary node is a problematic node that causes wrong candidate primary secondary cell selection. The second cell set includes M cells (working at an SCG frequency) that are managed by the third secondary node and that have best signal quality in the first measurement result. M is a maximum quantity of candidate primary secondary cells that can be accepted (Accept) by the third candidate secondary node, or M is a quantity of at least one third candidate primary secondary cell that is actually accepted by the third candidate secondary node.

Optionally, when the root cause is that the third secondary node is a problematic node that causes wrong candidate primary secondary cell selection, the first secondary node may further send a first notification message to the master node by using S 1008. The first notification message includes first indication information, and the first indication information indicates that the SCG failure of the terminal device is caused by the third secondary node.

When the initial cause is that the first secondary node is a problematic node that possibly causes wrong candidate primary secondary cell selection, the first secondary node may further determine the root cause of the SCG failure of the terminal device by using S1007. A specific process is as follows:
If the suitable primary secondary cell is in a first cell set, the first secondary node determines that the root cause is that the first secondary node is a problematic node that causes wrong candidate primary secondary cell selection. The first cell set includes N cells that have best signal quality in the first measurement result. N is a quantity of the at least one first candidate primary secondary cell.

Optionally, if the suitable primary secondary cell is not in the first cell set, it indicates that the first secondary node does not select at least one wrong first candidate primary secondary cell. The SCG failure may occur because the first measurement result and the second measurement result differ greatly (for example, the terminal device moves at a high speed, or radio link quality changes greatly). The first secondary node may further send the first notification message to the master node by using S1008. The first notification message includes first indication information, and the first indication information indicates that the SCG failure of the terminal device is not caused by the first secondary node.

In the foregoing two solutions, when the first secondary node determines that the root cause of the SCG failure of the terminal device is attributed to the first secondary node, the first secondary node may perform CPC configuration optimization on the first secondary node, for example, optimize a policy for selecting a candidate primary secondary cell and optimize setting of the execution triggering condition, so that a more proper CPC configuration can be configured for the UE in a subsequent CPC procedure of the UE, to reduce a probability of the SCG failure of the terminal device. When determining that the root cause of the SCG failure of the terminal device is irrelevant to the first secondary node, the first secondary node may also notify the master node by using the first notification message, so that the master node performs a further operation.

It should be further noted that in the foregoing two solutions, the first notification message may include some or all content of the second SCG failure information parsed by the first secondary node. For example, the first notification message may include the second measurement result. The first notification message may further include identification information of the suitable primary secondary cell, so that the master node continues to perform cause analysis on the SCG failure of the terminal device.

S1009: After receiving the first notification message from the first secondary node, the master node may send the second SCG failure information to the third secondary node. The third secondary node receives the second SCG failure information from the master node.

Optionally, the master node may determine the suitable primary secondary cell based on the second measurement result in the first notification message, or directly determine the suitable primary secondary cell based on the identification information of the suitable primary secondary cell in the first notification message, to determine the third secondary node.

S1010: The third secondary node determines the root cause of the SCG failure of the terminal device based on the second SCG failure information.

In an implementation, the third secondary node may determine the root cause of the SCG failure of the terminal device based on the second SCG failure information in the following steps:
e1: The third secondary node determines a suitable primary secondary cell based on the second SCG failure information.
e2: If the suitable primary secondary cell is in the second cell set, the third secondary node determines that the root cause is that the third secondary node is a problematic node that causes wrong candidate cell selection. The second cell set includes M cells (working at an SCG frequency) that are managed by the third secondary node and that have best signal quality in the first measurement result. M is a maximum quantity of candidate primary secondary cells that can be accepted (Accept) by the third candidate secondary node, or M is a quantity of at least one third candidate primary secondary cell that is actually accepted by the third candidate secondary node.

Optionally, if the suitable primary secondary cell is not in the second cell set, it indicates that the first secondary node does not select at least one wrong first candidate primary secondary cell. The SCG failure may occur because the first measurement result and the second measurement result differ greatly (for example, the terminal device moves at a high speed, or radio link quality changes greatly). In this case, the third secondary node may further send a second notification message to the master node by using S1011. The second notification message includes second indication information, and the second indication information indicates that the SCG failure of the terminal device is not caused by the third secondary node.

After S1010, when the third secondary node determines that the root cause of the SCG failure of the terminal device is attributed to the third secondary node, the third secondary node may perform CPC configuration optimization on the third secondary node, for example, optimize a policy for selecting a candidate primary secondary cell, so that a more proper CPC configuration can be configured for the UE in a subsequent CPC procedure of the UE. The CPC configuration includes a candidate primary secondary cell prepared by the third secondary node for the UE. This reduces a probability of the SCG failure of the terminal device.

It should be noted that, in this embodiment of this application, the master node, the first secondary node, and the third secondary node may use a method for determining a suitable primary secondary cell in the conventional technology. Details are not described herein again.

In conclusion, Embodiment 1 provides a communication method. According to the method, when the SCG failure occurs in a primary secondary cell change procedure performed by the terminal device or shortly after a successful change, after receiving the first SCG failure information reported by the terminal device, the master node may send the second SCG failure information to the first secondary node, so that the first secondary node can perform cause analysis on the SCG failure of the terminal device based on the second SCG failure information, to complete CPC configuration optimization, and configure a more proper CPC configuration for the UE in a subsequent CPC procedure of the UE. This reduces a probability of the SCG failure of the terminal device.

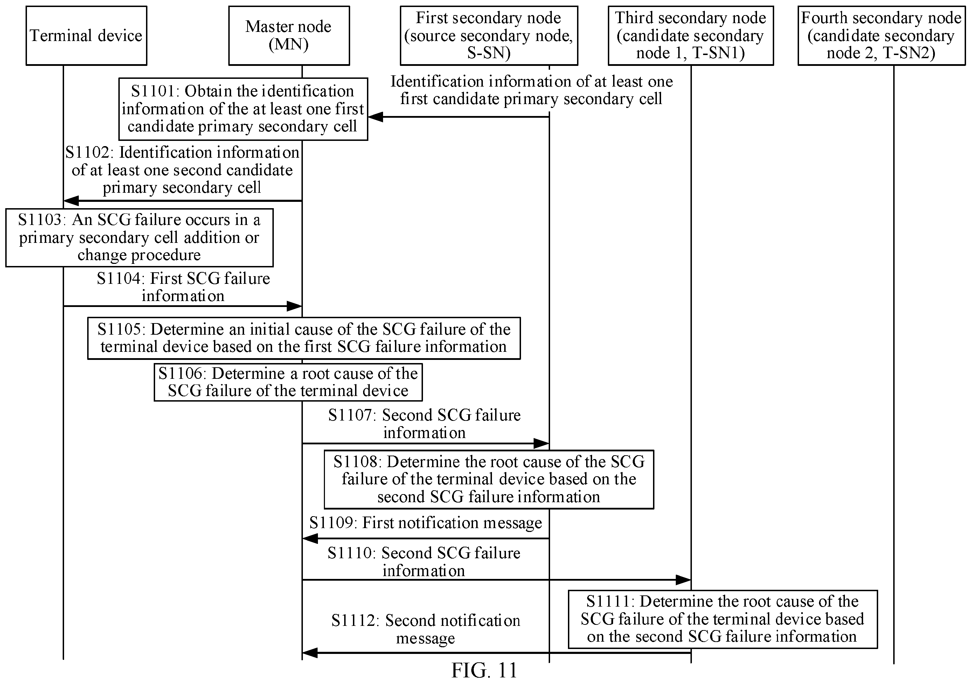

Embodiment 2: Embodiment 2 is applied to a CPA or CPC scenario, and a procedure is shown in FIG. 11. S1101 to S1103 are a conventional CPA or CPC procedure (a triggering node is not limited). For a specific process, refer to the foregoing detailed descriptions of CPAC shown in FIG. 9.

S1101: A master node obtains identification information of at least one first candidate primary secondary cell.

Optionally, in the CPC scenario, a CPC procedure may be triggered by the master node, or may be triggered by a first secondary node. According to different triggering nodes of the CPC procedure, manners of obtaining the identification information of the at least one first candidate primary secondary cell by the master node are also different. For a specific process, refer to S1001 in the embodiment shown in FIG. 10. Details are not described herein again.

However, in the CPA scenario, a base station triggers a CPA procedure, and selects the at least one first candidate primary secondary cell for a terminal device, to generate the identification information of the at least one first candidate primary secondary cell. For example, in the CPA procedure shown in FIG. 9, the master node may select the at least one first candidate primary secondary cell for the terminal device by using S901.

Optionally, regardless of whether in the CPC scenario or the CPA scenario, the first secondary node or the master node may select the at least one first candidate primary secondary cell based on a first measurement result reported by the UE in a candidate cell preparation phase.

S1102: The master node sends identification information of at least one second candidate primary secondary cell to the terminal device. For a specific process of this step, refer to S1002 in the embodiment shown in FIG. 10. Details are not described herein again.

S1103: The terminal device performs a primary secondary cell addition or change procedure, and an SCG failure occurs.

After S1102, the terminal device may continuously perform cell measurement, and evaluate whether there is a second candidate primary secondary cell that meets an execution triggering condition in the at least one second candidate primary secondary cell. If it is detected that one second candidate primary secondary cell (a target primary secondary cell) meets the execution triggering condition, CPA or CPC may be performed. The terminal device performs a procedure of random access to a target base station that manages the target primary secondary cell. When the terminal device fails to perform random access to the target base station or a radio link failure (radio link failure, RLF) occurs shortly (in specified duration) after successful access, the SCG failure occurs.

For example, in the CPA or CPC procedure shown in FIG. 9, the terminal device may perform a primary secondary cell addition or change procedure by using S904 to S909.

S1104: After the SCG failure occurs in the primary secondary cell change procedure performed by the terminal device or shortly after a successful change, the terminal device sends first SCG failure information to the master node.

For content included in the first SCG failure information, refer to the foregoing descriptions of the first SCG failure information reported by the UE. Details are not described herein again.

It should be noted that, after the terminal device reports the first SCG failure information, the terminal device does not need to continue to measure the at least one second primary secondary cell to continue to evaluate whether there is a second primary secondary cell that meets the execution triggering condition.

S1105: The master node determines an initial cause of the SCG failure of the terminal device based on the first SCG failure information.

In this embodiment, the master node may parse the first SCG failure information and obtain a second measurement result, for example, in a scenario in which the master node triggers CPC or CPA. For example, in a scenario in which the first secondary node triggers CPC, the master node and the first secondary node use a same RAT, for example, in an NR-DC scenario. In this way, the master node can determine a suitable primary secondary cell based on the second measurement result in the first SCG failure information, and may further perform cause analysis on the SCG failure.

Before performing initial cause analysis, the master node may further determine the suitable primary secondary cell based on the first SCG failure information, and determine, based on the suitable primary secondary cell, that a failure type of the SCG failure of the terminal device is CPC execution to a wrong cell. In addition, when sending second SCG failure information to the another secondary node, the master node may further notify the another secondary node of the failure type.

In a first implementation, when the master node triggers the CPC or CPA procedure, the master node may determine the initial cause in the following steps:
f1: The master node determines the suitable primary secondary cell based on the first SCG failure information.
f2: If the suitable primary secondary cell is not in the at least one first candidate primary secondary cell, the master node determines that the initial cause is that the master node is a problematic node that possibly causes wrong candidate primary secondary cell selection.
f3: If the suitable primary secondary cell is in the at least one first candidate primary secondary cell and is not in at least one third candidate primary secondary cell accepted by a third secondary node, the master node determines that the initial cause is that the third secondary node is a problematic node that possibly causes wrong candidate primary secondary cell selection, where the third secondary node is a secondary node to which the suitable primary secondary cell belongs.

In this implementation, after determining the initial cause of the SCG failure of the terminal, the master node may perform further processing based on the initial cause by using but not limited to the following solutions.

Solution I: The master node further analyzes a root cause only when the initial cause is related to the master node. Content of this solution is as follows:
When the initial cause is that the master node is a problematic node that possibly causes wrong candidate primary secondary cell selection, the master node may further determine the root cause of the SCG failure of the terminal device by using step S1106. A specific process is as follows:
If the suitable primary secondary cell is in a first cell set, the master node determines that the root cause is that the master node is a problematic node that causes wrong candidate primary secondary cell selection. The first cell set includes N cells (working at an SCG frequency) that have best signal quality in the first measurement result.

When the master node determines that the root cause of the SCG failure of the terminal device is attributed to the master node, the master node may perform CPA or CPC configuration optimization on the master node, for example, optimize a policy for selecting a candidate primary secondary cell, and optimize setting of the execution triggering condition, so that a more proper CPA or CPC configuration can be configured for the UE in a subsequent CPA or CPC procedure of the UE, to reduce a probability of the SCG failure of the terminal device. When the suitable primary secondary cell is not in the first cell set, it indicates that the master node does not select at least one wrong first candidate primary secondary cell. The SCG failure may occur because the first measurement result and the second measurement result differ greatly (for example, the terminal device moves at a high speed, or radio link quality changes greatly). In this case, the master node may not perform subsequent analysis and CPA or CPC configuration optimization.

When the initial cause is that the third secondary node is a problematic node that possibly causes wrong candidate primary secondary cell selection, the master node may further send the second SCG failure information to the third secondary node by using S1110.

Solution II: Regardless of whether the initial cause is related to the master node, the master node further analyzes a root cause. Content of this solution is as follows:
When the initial cause is that the master node is a problematic node that possibly causes wrong candidate primary secondary cell selection, similar to Solution I, the master node may further determine the root cause of the SCG failure of the terminal device by using step S1106. A specific process is as follows:
If the suitable primary secondary cell is in a first cell set, the master node determines that the root cause is that the master node is a problematic node that causes wrong candidate primary secondary cell selection. The first cell set includes N cells (working at an SCG frequency) that have best signal quality in the first measurement result.

When the initial cause is that the third secondary node is a problematic node that possibly causes wrong candidate primary secondary cell selection, the master node may further determine the root cause of the SCG failure of the terminal device by using step S1106. A specific process is as follows:
If the suitable primary secondary cell is in a second cell set, the master node determines that the root cause is that the third secondary node is a problematic node that causes wrong candidate primary secondary cell selection. The second cell set includes M cells (working at an SCG frequency) that are managed by the third secondary node and that have best signal quality in the first measurement result.

Optionally, when the master node determines that the root cause of the SCG failure of the terminal device is attributed to the third secondary node, the master node notifies the third secondary node that the SCG failure of the terminal device is caused by the third secondary node, so that the third secondary node performs CPA or CPC configuration optimization. However, when the suitable primary secondary cell is not in the second cell set, it indicates that the third secondary node is not a problematic node that causes wrong candidate primary secondary cell selection.

In a second implementation, when the first secondary node triggers the CPA procedure, the master node may determine the initial cause in the following steps:
g1: The master node determines the suitable primary secondary cell based on the first SCG failure information.
g2: If the suitable primary secondary cell is not in the at least one first candidate primary secondary cell, the master node determines that the initial cause is that the first secondary node is a problematic node that possibly causes wrong candidate primary secondary cell selection.
g3: If the suitable primary secondary cell is in the at least one first candidate primary secondary cell and is not in at least one third candidate primary secondary cell accepted by a third secondary node, the master node determines that the initial cause is that the third secondary node is a problematic node that possibly causes wrong candidate primary secondary cell selection, where the third secondary node is a secondary node to which the suitable primary secondary cell belongs.

In this implementation, after determining the initial cause of the SCG failure of the terminal, the master node may perform further processing based on the initial cause by using but not limited to the following solutions.

Solution A: The master node sends the second SCG failure information to a secondary node related to the initial cause, so that the secondary node analyzes a root cause. Optionally, when the second SCG failure information is sent, identification information of a suitable primary secondary cell is indicated to the related secondary node. Content of this solution is as follows:
When the initial cause is that the first secondary node is a problematic node that possibly causes wrong candidate primary secondary cell selection, the master node sends the second SCG failure information to the first secondary node by using S1107.

When the initial cause is that the third secondary node is a problematic node that possibly causes wrong candidate primary secondary cell selection, the master node sends the second SCG failure information to the third secondary node by using S1110.

Solution B: The master node further analyzes a root cause. Content of this solution is as follows:
When the initial cause is that the first secondary node is a problematic node that possibly causes wrong candidate primary secondary cell selection, the master node determines the root cause of the SCG failure of the terminal device by using step S1106. A specific process is as follows:
If the suitable primary secondary cell is in a first cell set, the master node determines that the root cause is that the first secondary node is a problematic node that causes wrong candidate primary secondary cell selection. The first cell set includes N cells (working at an SCG frequency) that have best signal quality in the first measurement result.

If the suitable primary secondary cell is not in the first cell set, it indicates that the first secondary node is not a problematic node that causes wrong candidate primary secondary cell selection.

When the initial cause is that the third secondary node is a problematic node that possibly causes wrong candidate primary secondary cell selection, the master node determines the root cause of the SCG failure of the terminal device by using step S1106. A specific process is as follows:
If the suitable primary secondary cell is in a second cell set, the master node determines that the root cause is that the third secondary node is a problematic node that causes wrong candidate primary secondary cell selection. The second cell set includes M cells (working at an SCG frequency) that are managed by the third secondary node and that have best signal quality in the first measurement result.

If the suitable primary secondary cell is not in the second cell set, it indicates that the third secondary node is not a problematic node that causes wrong candidate primary secondary cell selection.

In this implementation, optionally, when the master node determines that the root cause of the SCG failure of the terminal device is attributed to the first secondary node or the third secondary node, the master node notifies the first secondary node or the third secondary node that the SCG failure of the terminal device is caused by the first secondary node or the third secondary node, so that the first secondary node or the third secondary node performs CPA or CPC configuration optimization.

S1108: After the first secondary node receives the second SCG failure information from the master node, the first secondary node determines the root cause of the SCG failure of the terminal device based on the second SCG failure information.

In an implementation, the first secondary node may determine the root cause of the SCG failure of the terminal device based on the second SCG failure information in the following steps:
h1: The first secondary node determines a suitable primary secondary cell based on the second SCG failure information.
h2: If the suitable primary secondary cell is in the first cell set, the first secondary node determines that the root cause is that the first secondary node is a problematic node that causes wrong candidate primary secondary cell selection. The first cell set includes N cells (working at an SCG frequency) that have best signal quality in the first measurement result.

Optionally, if the suitable primary secondary cell is not in the first cell set, the first secondary node may further send a first notification message to the master node by using S1109. The first notification message includes first indication information, and the first indication information indicates that the SCG failure of the terminal device is not caused by the first secondary node.

When the first secondary node determines that the root cause of the SCG failure of the terminal device is attributed to the first secondary node, the first secondary node may further perform CPA or CPC configuration optimization on the first secondary node.

S1111: After the third secondary node receives the second SCG failure information from the master node, the first secondary node determines the root cause of the SCG failure of the terminal device based on the second SCG failure information.

In an implementation, the third secondary node may perform S1111 in the following steps:
i1: The third secondary node determines a suitable primary secondary cell based on the second SCG failure information.
i2: If the suitable primary secondary cell is in the second cell set, the third secondary node determines that the root cause is that the third secondary node is a problematic node that causes wrong candidate cell selection. The second cell set includes M cells (working at an SCG frequency) that are managed by the third secondary node and that have best signal quality in the first measurement result.

Optionally, if the suitable primary secondary cell is not in the second cell set, the third secondary node may further send a second notification message to the master node by using S1112. The second notification message includes second indication information, and the second indication information indicates that the SCG failure of the terminal device is not caused by the third secondary node.

When the third secondary node determines that the root cause of the SCG failure of the terminal device is attributed to the third secondary node, the third secondary node may further perform CPA or CPC configuration optimization on the third secondary node.

It should be noted that, for values of N and M in this embodiment of this application, refer to Embodiment 1.

It should be noted that, in this embodiment of this application, the master node, the first secondary node, and the third secondary node may use a method for determining a suitable primary secondary cell in the conventional technology. Details are not described herein again.

In conclusion, Embodiment 2 provides a communication method. According to the method, when the SCG failure occurs in a primary secondary cell addition or change procedure performed by the terminal device, after the master node receives the first SCG failure information reported by the terminal device, the master node may perform cause analysis on the SCG failure of the terminal device based on the first SCG failure information, so that CPA or CPC configuration optimization can be completed, and a more proper CPA or CPC configuration can be configured for the UE in a subsequent CPA or CPC procedure of the UE, to reduce a probability of the SCG failure of the terminal device.

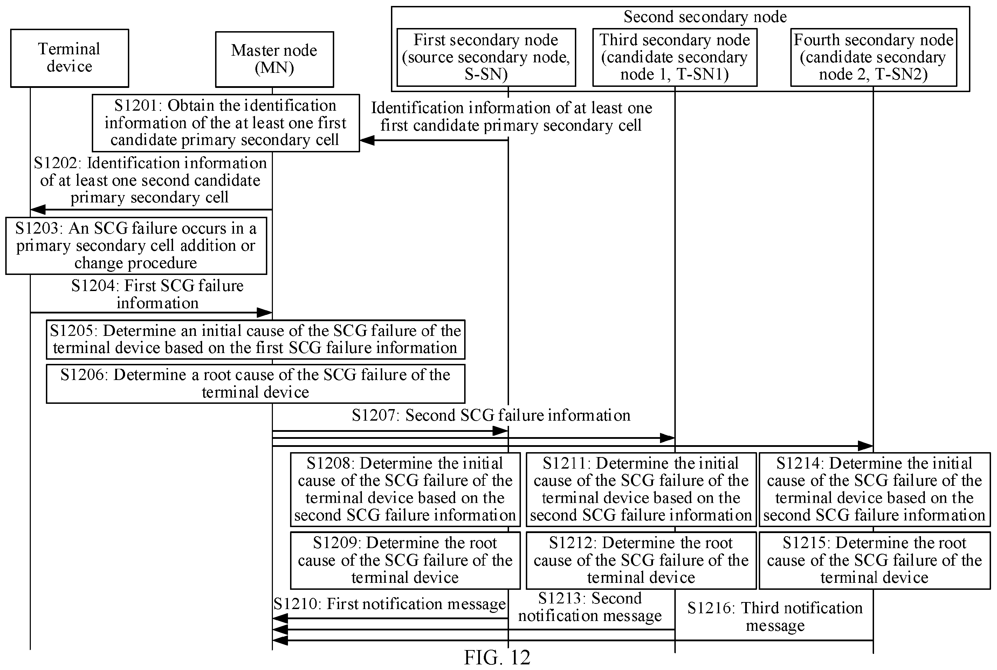

Embodiment 3: Embodiment 3 is applied to a CPA or CPC scenario, and a procedure is shown in FIG. 12. S1201 to S1203 are a conventional CPA or CPC procedure (a triggering node is not limited). For a specific process, refer to the foregoing detailed descriptions of CPAC shown in FIG. 9.

S1201 to S1204 are the same as S1101 to S1104 in Embodiment 2, and mutual reference may be made between the same steps. Details are not described herein again.

S1205: Optionally, in a scenario in which a master node initiates CPC or CPA, the master node determines an initial cause of an SCG failure of a terminal device based on first SCG failure information. Optionally, a process of determining the initial cause by the master node is the same as steps f1 and f2 in S1105 in Embodiment 2, and details are not described herein again.

After the master node determines the initial cause, when the initial cause is that the master node is a problematic node that possibly causes wrong candidate primary secondary cell selection, the master node may further determine a root cause of the SCG failure of the terminal device by using S1206. A specific process is as follows:
If the suitable primary secondary cell is in a first cell set, the master node determines that the root cause is that the master node is a problematic node that causes wrong candidate primary secondary cell selection. The first cell set includes N cells (working at an SCG frequency) that have best signal quality in a first measurement result.

When the master node determines that the root cause of the SCG failure of the terminal device is attributed to the master node, the master node may perform CPA or CPC configuration optimization on the master node. When the suitable primary secondary cell is not in the first cell set, it indicates that the master node is not a problematic node that causes wrong candidate primary secondary cell selection, and the master node may not perform subsequent analysis, or CPA or CPC configuration optimization.

When the initial cause is irrelevant to the master node, the master node may not perform any processing.

S1207: The master node sends second SCG failure information to second secondary nodes based on the first SCG failure information. The second secondary nodes may include all secondary nodes participating in CPA or CPC. For example, in a scenario in which the first secondary node initiates CPC, the second secondary nodes may include the first secondary node and all candidate secondary nodes. In a scenario in which the master node initiates CPC or CPA, the second secondary nodes include all candidate secondary nodes, and do not include the first secondary node.

After receiving the second SCG failure information, each secondary node in the second secondary nodes may determine the initial cause of the SCG failure of the terminal device based on the second SCG failure information, and further, may analyze a root cause based on the initial cause.

The following uses the first secondary node, a third secondary node, and a fourth secondary node as examples for description.

S1208: After receiving the second SCG failure information from the master node, the first secondary node determines the initial cause of the SCG failure of the terminal device based on the second SCG failure information. Optionally, a process of determining the initial cause by the first secondary node is the same as steps d1 and d2 in S1006 in Embodiment 1, and details are not described herein again.

Optionally, when the initial cause is that the first secondary node is a problematic node that possibly causes wrong candidate primary secondary cell selection, the first secondary node further determines the root cause of the SCG failure of the terminal device by using step S1209. A specific process is as follows:
If the suitable primary secondary cell is in the first cell set, the first secondary node determines that the root cause is that the first secondary node is a problematic node that causes wrong candidate primary secondary cell selection. The first cell set includes N cells (working at an SCG frequency) that have best signal quality in the first measurement result.

When the first secondary node determines that the root cause of the SCG failure of the terminal device is attributed to the first secondary node, the first secondary node may perform CPA or CPC configuration optimization on the first secondary node. When the suitable primary secondary cell is not in the first cell set, it indicates that the first secondary node is not a problematic node that causes wrong candidate primary secondary cell selection, and the first secondary node may send a first notification message to the master node by using S1210. The first notification message includes first indication information, and the first indication information indicates that the SCG failure of the terminal device is not caused by the first secondary node.

S1211: After receiving the second SCG failure information from the master node, the third secondary node determines the initial cause of the SCG failure of the terminal device based on the second SCG failure information.

It should be noted that before the third secondary node receives the second SCG failure information from the master node, the third secondary node receives, from the master node, identification information of at least one first candidate primary secondary cell managed by the third secondary node. For example, in the CPAC procedure shown in FIG. 9, the master node may send, to each candidate secondary node by using S901, identification information of at least one first candidate primary secondary cell managed by the candidate secondary node. In this way, each candidate secondary node can select at least one accepted third candidate primary secondary cell from the corresponding at least one first candidate primary secondary cell.

Before determining the initial cause, the third secondary node may further determine, based on the second SCG failure information, that a failure type of the SCG failure of the terminal device is CPC execution to a wrong cell.

In an implementation, the third secondary node may determine the initial cause of the SCG failure of the terminal device based on the second SCG failure information in the following steps:
j 1: The third secondary node determines a suitable primary secondary cell based on the second SCG failure information.
j2: If the suitable primary secondary cell is in the at least one first candidate primary secondary cell managed by the third secondary node, the third secondary node determines that the initial cause is that the third secondary node is a problematic node that possibly causes wrong candidate primary secondary cell selection.
j3: If the suitable primary secondary cell is not in the at least one first candidate primary secondary cell managed by the third secondary node, the third secondary node determines that the initial cause is that the third secondary node is not a problematic node that causes wrong candidate primary secondary cell selection.

Optionally, when the initial cause is that the third secondary node is a problematic node that possibly causes wrong candidate primary secondary cell selection, the third secondary node may further determine the root cause of the SCG failure of the terminal device by using step S1212. A specific process is as follows:

If the suitable primary secondary cell is in a second cell set, the third secondary node determines that the root cause is that the third secondary node is a problematic node that causes wrong candidate cell selection. The second cell set includes M cells (working at an SCG frequency) that are managed by the third secondary node and that have best signal quality in the first measurement result.

When the third secondary node determines that the root cause of the SCG failure of the terminal device is attributed to the third secondary node, the third secondary node may perform CPA or CPC configuration optimization on the third secondary node. When the suitable primary secondary cell is not in the second cell set, it indicates that the third secondary node is not a problematic node that causes wrong candidate primary secondary cell selection, and the third secondary node may send a second notification message to the master node by using S1213. The second notification message includes second indication information, and the second indication information indicates that the SCG failure of the terminal device is not caused by the third secondary node.

S1214: After the fourth secondary node receives the second SCG failure information from the master node, the fourth secondary node determines the initial cause of the SCG failure of the terminal device based on the second SCG failure information.

Similar to 1211, before the fourth secondary node receives the second SCG failure information from the master node, the fourth secondary node also receives, from the master node, identification information of at least one first candidate primary secondary cell managed by the fourth secondary node.

In an implementation, the fourth secondary node may determine the initial cause of the SCG failure of the terminal device based on the second SCG failure information in the following steps:
k1: The fourth secondary node determines a suitable primary secondary cell based on the second SCG failure information.
k2: If the suitable primary secondary cell is in the at least one first candidate primary secondary cell managed by the fourth secondary node, the fourth secondary node determines that the initial cause is that the fourth secondary node is a problematic node that possibly causes wrong candidate primary secondary cell selection.
k3: If the suitable primary secondary cell is not in the at least one first candidate primary secondary cell managed by the fourth secondary node, the fourth secondary node determines that the initial cause is that the fourth secondary node is not a problematic node that causes wrong candidate primary secondary cell selection.

When the initial cause is that the fourth secondary node is not a problematic node that causes wrong candidate primary secondary cell selection, the fourth secondary node may further send the third notification message to the master node by using step S1216. The third notification message includes third indication information, and the third indication information indicates that the SCG failure of the terminal device is not caused by the fourth secondary node.

When the initial cause is that the fourth secondary node is a problematic node that possibly causes wrong candidate primary secondary cell selection, it indicates that the fourth secondary node is a secondary node that manages the suitable primary secondary cell (that is, the fourth secondary node is equivalent to the third secondary node). In this case, the fourth secondary node may determine the root cause of the SCG failure of the terminal device by using S1215. For a specific process, refer to step S1212. Details are not described herein again.

In conclusion, Embodiment 3 provides a communication method. According to the method, when the SCG failure occurs in the primary secondary cell addition or change procedure performed by the terminal device or shortly after successful addition or a successful change, after receiving the first SCG failure information reported by the terminal device, the master node may send the second SCG failure information to all second secondary nodes participating in CPA or CPC, so that each second secondary node can perform cause analysis on the SCG of the terminal device, to complete CPC configuration optimization, and configure a more proper CPC configuration for the UE in a subsequent CPC procedure of the UE. This reduces a probability of the SCG failure of the terminal device.

Based on the method provided in the embodiment shown in FIG. 10, an embodiment of this application further provides an instance of a communication method. This instance provides a problem analysis method in a scenario of SN-triggered CPC execution to a wrong cell.

A main idea of this instance is: After receiving first SCG failure information reported by UE, a master node MN forwards second SCG failure information to a source secondary node S-SN for initial problem analysis, to determine a problematic node that possibly causes wrong candidate cell selection. Then, the S-SN performs initial cause analysis and root cause analysis on an SCG failure, or the S-SN indicates, to the MN, another problematic node (a candidate SN corresponding to a suitable PSCell) that possibly causes wrong candidate cell selection, and the MN forwards the second SCG failure information to the another problematic node for root cause analysis. Initial cause analysis and root cause analysis need to be performed with reference to control plane information in a CPC preparation phase, to determine whether the S-SN or the candidate SN causes wrong candidate cell selection.

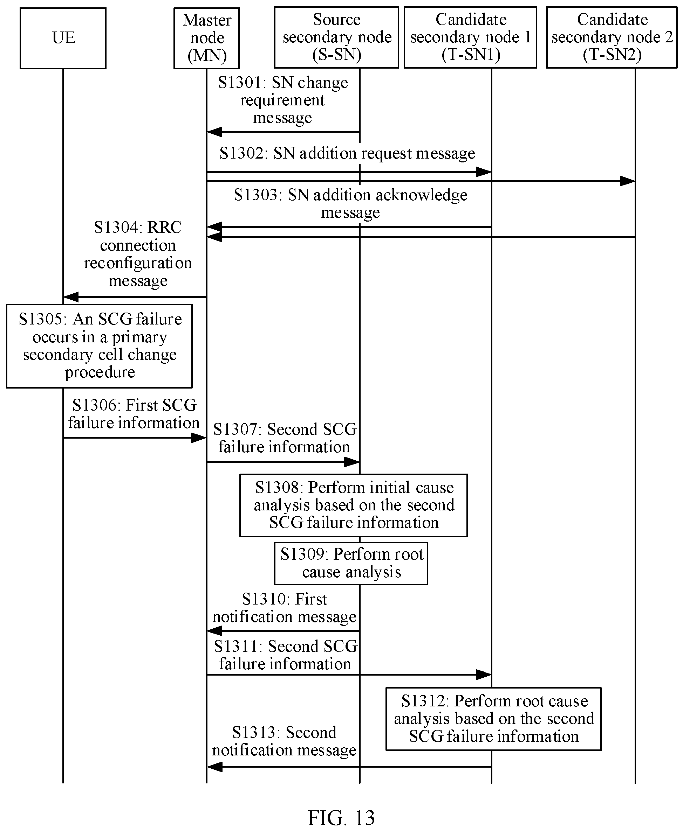

A flowchart of the instance is shown in FIG. 13, and the specific steps are as follows:
S1301 to S1303 are the same as S910, S901, and S902 in the CPC procedure triggered by the SN shown in FIG. 9, and mutual reference may be made between the same steps.

In this procedure, the S-SN triggers CPC, and an SN change requirement message sent to the MN includes at least one of the following: a first candidate PSCell list of each candidate SN, max.PSCell of each candidate SN (which is a maximum quantity of candidate PSCells that can be accepted by each candidate SN, and is subsequently denoted as M), a first measurement result (a measurement result reported by the UE in a candidate cell preparation phase), and the like. The MN sends an SN addition request message to each candidate SN (a T-SN1 and a T-SN2 are used as examples). The SN addition request message sent to the T-SN1 includes a first candidate PSCell list managed by the T-SN1, M, the first measurement result, and the like. Each candidate SN indicates, in an SN addition acknowledge message, a second candidate PSCell list accepted by the candidate SN.

The MN does not parse the first measurement result included in the SN change requirement message, because the S-SN indicates the measurement result to the MN in a container form.

S1304 and S1305: The MN sends an RRC connection reconfiguration message including CPC configuration information to the UE, and the UE feeds back an RRC connection reconfiguration complete message to the MN. The CPC configuration information includes a third PSCell list, and the third PSCell list includes a candidate PSCell in the second candidate PSCell list accepted by each candidate SN. The UE continuously determines whether a candidate PSCell in the third PSCell list meets an execution triggering condition. When the UE detects that a candidate PSCell meets the corresponding execution triggering condition, that is, CPC is triggered, the candidate PSCell is a target PSCell, and a candidate SN that manages the target PSCell is a target SN. The UE fails to perform random access to the target SN, or an RLF occurs shortly after successful access. That is, an SCG failure occurs.

S1306: The UE sends the first SCG failure information to the MN. The first SCG failure information includes at least a UE measurement result at a failure moment (a measurement result corresponding to an MCG measurement configuration and a measurement result corresponding to an SCG measurement configuration (a second measurement result)). In the SN-triggered procedure, the MN may not be able to obtain a measurement result at an SCG frequency based on the first SCG failure information.

For example, in EN-DC and NGEN-DC, the MN cannot obtain the second measurement result based on the first SCG failure information reported by the UE, and therefore cannot determine a suitable PSCell (suitable PSCell) based on the second measurement result. However, in NR-DC, the MN may obtain the second measurement result based on the first SCG failure information reported by the UE, to find the suitable PSCell.

S1307: The MN sends the second SCG failure information to the S-SN.

S1308: The S-SN performs initial cause analysis based on the second SCG failure information to determine whether it is case (a) or case (b), and determines an initial cause of the SCG failure of the terminal device (that is, a problematic node that possibly causes wrong candidate cell selection).

Optionally, an initial problem analysis procedure of the S-SN includes: The S-SN receives the second SCG failure information from the MN, determines a suitable PSCell, and further determines that a failure type of the SCG failure is CPC execution to a wrong cell. Then, the S-SN performs initial cause analysis to determine a problematic node that possibly causes wrong candidate PSCell cell selection.

The initial cause is as follows:
(a) The suitable PSCell is not in the first candidate PSCell list prepared by the S-SN. In this case, the initial cause is that the S-SN is a problematic node that possibly causes wrong candidate PSCell selection.
(b) The suitable PSCell is in the first candidate PSCell list and is not in a second candidate PSCell list accepted by a candidate SN (the T-SN1 is used as an example) to which the suitable PSCell belongs. In this case, the initial cause is that the T-SN1 is a problematic node that possibly causes wrong candidate PSCell selection.

In a manner, the S-SN performs subsequent related steps based on an initial analysis result.

In case (a), the S-SN continues to perform root cause analysis by using S1309.

In case (b), the S-SN sends a first notification message to the MN by using S1310. The first notification message may indicate that the candidate SN (the T-SN1) to which the suitable PSCell belongs is a problematic node that possibly causes wrong candidate cell selection. Optionally, the first notification message may further include identification information of the suitable PSCell or the second measurement result.

After receiving the first notification message, the MN may send the second SCG failure information to the T-SN1 by using S1311 for root cause analysis. Optionally, when sending the second SCG failure information, the MN may indicate wrong candidate cell selection.

An SN that performs root cause analysis may indicate, to the MN through an SCG failure transfer message (SCG failure transfer), that the SCG failure is not caused by wrong candidate cell selection by the SN or may be caused by another SN. For example, the first notification message and a second notification message in this instance may be SCG failure transfer messages.

In a manner, the S-SN continues to perform root cause analysis.

Each node performs root cause analysis to further determine whether omission of the suitable PSCell is caused by wrong cell selection or a large difference between measurement results of the UE at two moments at a candidate cell preparation phase and the SCG failure (that is, the first measurement result and the second measurement result differ greatly). For example, when the UE moves at a high speed and radio link quality changes greatly, the measurement results may differ greatly.

Root cause analysis methods are as follows:
In case (a), the corresponding node may determine, based on whether the suitable PSCell is in N cells that have best quality in the first measurement result, whether a root cause is wrong selection of the first candidate PSCell list prepared by the S-SN.
In case (b), the corresponding node may determine, based on whether the suitable PSCell is in M cells that have best signal quality in the first measurement result and that are managed by the T-SN1, whether a root cause is wrong selection of the second candidate PSCell accepted by the T-SN1.

For specific descriptions of S1306 to S1313, refer to a specific process of S1004 to S1011 in Embodiment 1. Details are not described herein again.

In this instance, in a scenario of SN-triggered CPC execution to a wrong cell, the S-SN or a candidate SN may perform cause analysis for a candidate cell selection problem based on the second SCG failure information and control plane UE context related information (a measurement result, a candidate PSCell list, and the like) sent by the MN, so that CPC configuration optimization (including optimizing a candidate cell selection policy and an execution triggering condition) can be performed, and a more proper CPC configuration can be configured for the UE, to reduce a probability of a CPC failure.

Based on the method provided in the embodiment shown in FIG. 11, an embodiment of this application further provides an instance of a communication method. This instance provides a problem analysis method in a scenario of CPA or CPC execution to a wrong cell.

A main idea of this instance is: An MN performs initial cause analysis and root cause analysis based on first SCG failure information reported by UE, determines a problematic node, and sends some information reported by the UE to the problematic node; or the MN performs initial cause analysis based on the first SCG failure information reported by the UE, identifies only problematic nodes that possibly cause a failure, and sends second SCG failure information to these problematic nodes for final root cause analysis, and the problematic node may indicate to the MN that a root cause of the failure is attributed to another node.

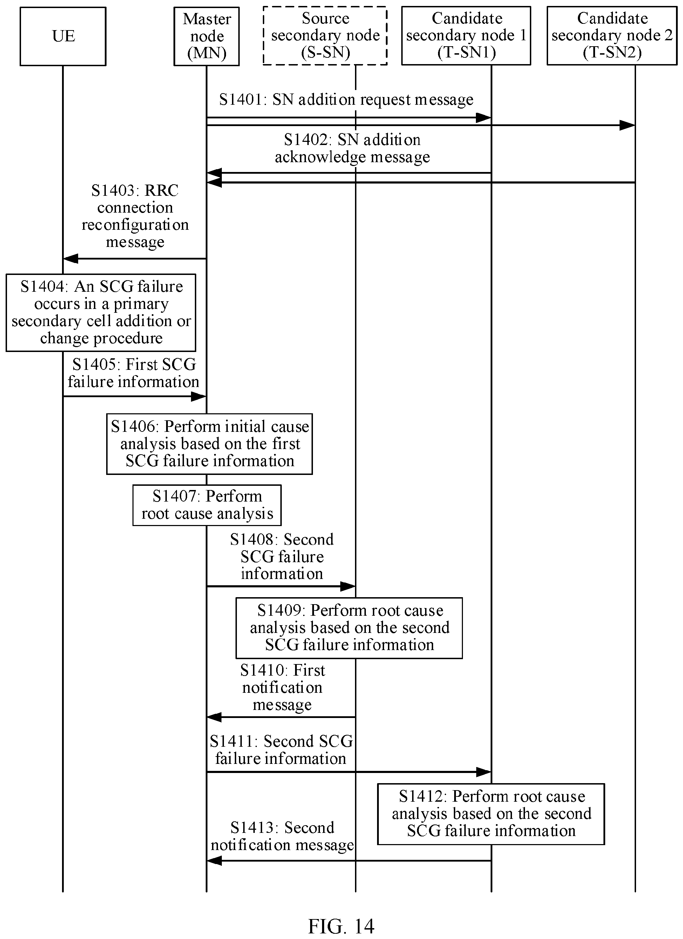

A flowchart of the instance is shown in FIG. 14, and the specific steps are as follows:
S1401 and S1402 are the same as S901 and S902 in the CPA or CPC procedure shown in FIG. 9, and mutual reference may be made between the same steps. For S1401 and S1402, refer to S1302 and S1303 in the instance shown in FIG. 13.

The procedure may be CPA or CPC triggered by the MN or an S-SN. This is not limited in this application. If the S-SN triggers CPC, before 1401, the S-SN sends an SN change requirement message to the MN. For a specific process, refer to S1301 in the instance shown in FIG. 13.

S1403 and S1404 are similar to steps S1303 to S1305 in FIG. 13, and details are not described herein again.

S1405: The UE sends first SCG failure information to the MN. The first SCG failure information includes at least a UE measurement result at a failure moment (which may include a measurement result corresponding to an MCG measurement configuration and a measurement result corresponding to an SCG measurement configuration).

Based on different scenarios, the MN may obtain a measurement result of an SCG frequency (referred to as a second measurement result for short) in different manners.
(1) The procedure is initiated by the MN. The MN sends measurement configuration information to the UE. The UE performs cell measurement based on the measurement configuration information, and evaluates whether a candidate PSCell in a third candidate PSCell list meets an execution triggering condition. In this case, the MN may obtain the second measurement result based on the measurement result (measResultFreqList) corresponding to the MCG measurement configuration.
(2) The procedure is initiated by the SN. In NR-DC, the MN may obtain, through parsing, the measurement result corresponding to the SCG measurement configuration, to obtain the second measurement result.

S1406: The MN performs initial cause analysis based on the first SCG failure information to determine whether it is case (a) or (b), and determines an initial cause of the SCG failure of the terminal device (that is, a problematic node that possibly causes wrong candidate cell selection).

Optionally, an initial cause analysis procedure of the MN includes: The MN determines a suitable PSCell based on the first SCG failure information, and further determines that a failure type of the SCG failure is CPA or CPC execution to a wrong cell. Then, the MN performs initial cause analysis to determine a problematic node that possibly causes wrong candidate PSCell cell selection.

The initial cause is as follows:
(a) The suitable PSCell is not in a first candidate PSCell list prepared by a triggering node (the MN or the S-SN). In this case, the initial cause is that the triggering node is a problematic node that possibly causes wrong candidate PSCell selection.
(b) The suitable PSCell is in the first candidate PSCell list and is not in a second candidate PSCell list accepted by a candidate SN (the T-SN1 is used as an example) to which the suitable PSCell belongs. In this case, the initial cause is that the T-SN1 is a problematic node that possibly causes wrong candidate PSCell selection.

In a manner, if CPA or CPC is triggered by the MN, the MN may perform root cause analysis by using S1407.

In another manner, the MN performs subsequent processing based on an initial analysis result. In case (a), the MN performs root cause analysis. In case (b), the MN sends, by using S1408, the second SCG failure information to the T-SN1 corresponding to the suitable PSCell for root cause analysis. When sending the second SCG failure information, the MN may indicate wrong candidate cell selection.

After performing root cause analysis, the T-SN may indicate, to the MN through an SCG failure transfer message (SCG failure transfer), that the SCG failure is not caused by wrong candidate cell selection by the T-SN or may be caused by another SN. For example, the first notification message and a second notification message in this instance may be SCG failure transfer messages.

For a root cause analysis method, refer to the descriptions in Embodiment 1.

For specific descriptions of S1406 to S1413, refer to the specific process of S1105 to S1112 in Embodiment 2. Details are not described herein again.

In this instance, in a scenario of CPA or CPC execution to a wrong cell, the MN may perform cause analysis for a candidate cell selection problem based on the first SCG failure information reported by the UE and control plane UE context related information, so that CPA or CPC configuration optimization (including optimizing a policy for selecting a candidate cell and an execution triggering condition) can be performed, and a more proper CPA or CPC configuration can be configured for the UE, to reduce a probability of a CPA or CPC failure.

Based on the method provided in the embodiment shown in FIG. 12, an embodiment of this application further provides an instance of a communication method. This instance provides a problem analysis method in a scenario of CPA or CPC execution to a wrong cell.

A main idea of this instance is as follows: After receiving first SCG failure information reported by UE, an MN may send second SCG failure information to all participating SNs, and the participating SNs perform initial cause analysis. In a scenario in which the MN triggers CPC or CPA, the MN may also perform initial cause analysis based on the first SCG failure information. In a scenario in which the MN triggers CPC or CPA, the participating SNs may include all candidate SNs. In a scenario in which an S-SN triggers CPC, the participating SNs may further include an S-SN. If a participating SN determines that the participating SN is not a problematic node that possibly causes a failure, the participating SN may indicate to the MN that the SCG failure of the UE is not caused by the participating SN, or indicate that the SCG failure is caused by another node; otherwise, the participating SN performs root cause analysis.

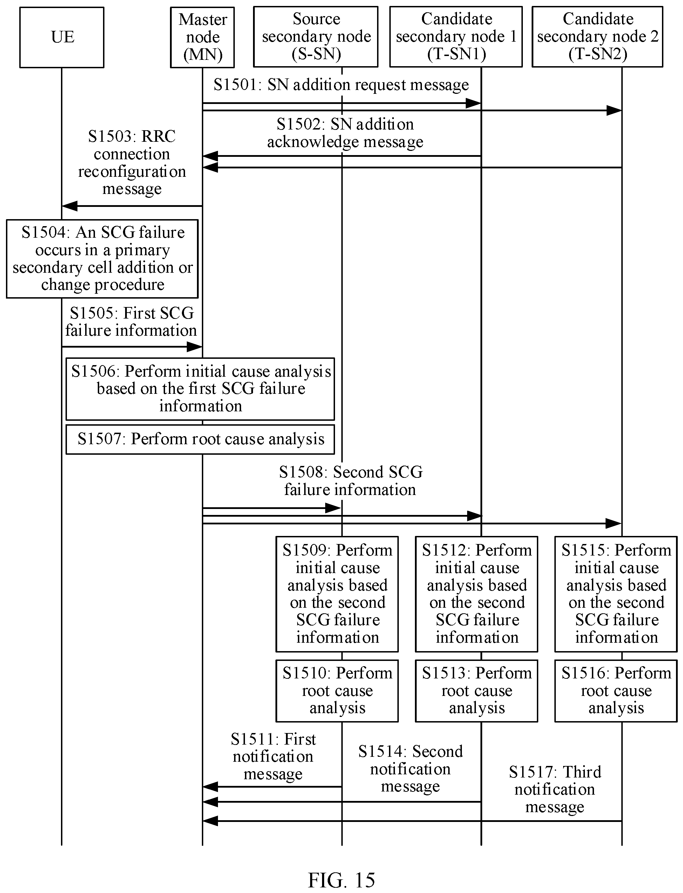

A flowchart of the instance is shown in FIG. 15, and the specific steps are as follows:
S1501 to S1505 are the same as S1401 to S1405 in the instance shown in FIG. 14, and mutual reference may be made between the same steps. Details are not described herein again.
S1506: In a scenario in which the MN triggers CPC or CPA, the MN may perform initial cause analysis based on the first SCG failure information.

Optionally, the MN may further perform root cause analysis based on an initial cause analysis result by using S1507.

S1508: The MN sends the second SCG failure information to all the participating SNs. The participating SNs include all candidate SNs (for example, T-SN1 and T-SN2 in the figure).

In steps 1509, S1512, and S1515, each participating SN may perform initial cause analysis based on the second SCG failure information.

An initial cause analysis procedure of any participating SN includes: The participating SN determines a suitable PSCell based on the second SCG failure information, and further determines that a failure type of the SCG failure is CPA or CPC execution to a wrong cell. Then, the participating SN performs initial cause analysis to determine a problematic node that possibly causes wrong candidate PSCell cell selection.

If the participating SN is a candidate SN, in the initial cause analysis procedure, if the suitable PSCell is not a cell managed by the candidate SN or is not in a first candidate PSCell list corresponding to the candidate SN (an SN addition request message sent by the MN to the candidate SN in S1501 carries the first candidate PSCell list corresponding to the candidate SN), the candidate SN indicates to the MN that the SCG failure of the UE is not caused by wrong candidate cell selection by the candidate SN; otherwise (the suitable PSCell is in the first candidate PSCell list corresponding to the candidate SN and is not in a second candidate PSCell list accepted by the candidate SN), the candidate SN needs to perform root cause analysis by using S1513 or S1516.

If the participating node is the S-SN, in an initial cause analysis procedure of the S-SN, if the suitable PSCell is not in a first candidate cell list generated by the S-SN, the S-SN needs to perform root cause analysis by using S1510; otherwise, the S-SN may indicate to the MN that the SCG failure of the UE is not caused by wrong candidate cell selection by the S-SN.

In addition, a participating SN that performs root cause analysis may indicate, to the MN through an SCG failure transfer message (SCG failure transfer), that the SCG failure is not caused by wrong candidate cell selection by the participating SN or may be caused by another SN. For example, in this instance, a first notification message in S1511, a second notification message in S1514, and a third notification message in S1517 may be SCG failure transfer messages.

In this instance, in a scenario of CPA or CPC execution to a wrong cell, all participating SNs may perform cause analysis for a candidate cell selection problem based on the second SCG failure information and control plane UE context related information that are sent by the MN, so that CPC configuration optimization (including optimizing a candidate cell selection policy and an execution triggering condition) can be performed, and a more proper CPC configuration is configured for the UE., to reduce a probability of a CPC failure.

In the CHO procedure shown in FIG. 7, a CHO failure may also occur on the UE. In a current MRO mechanism, after the UE accesses a base station again, the base station may request an RLF report from the UE, and then the base station sends the RLF report to a previous serving node of the UE. However, the MRO does not perform further CHO failure analysis, and therefore cannot implement CHO configuration optimization.

The following describes some concepts in a CHO failure cause analysis procedure.

The RLF report includes at least one of the following:
(1) failed primary cell identifier (failedPcellID): indicates information about a cell in which the UE detects that an RLF is sent or information about a target cell in which a handover failure occurs;
(2) connection failure type (connectionFailureType): an RLF, a handover failure (handover failure, HOF), or expiry of a timer (the timer is started after the UE sends a measurement report, for example, T312);
(3) previous primary cell identifier (previousPCellId): indicates information about a source cell in which the UE receives a previous handover command;
(4) reestablishment cell identifier (reestablishmentCellId): indicates information about a cell to which reestablishment is initiated after a connection failure;
(5) connection failure time (timeConnFailure): time elapsed since reception of a last handover command until a connection failure; and
(6) time since a failure (timeSinceFailure): indicates duration recorded since a connection failure, which is usually time since the connection failure until reporting of an RLF report.

For a CHO scenario, specific failure types are defined as follows:
Too late CHO execution: CHO is configured for UE, but CHO execution is not triggered. If an RLF occurs after the UE stays in a cell for a long period of time, the UE attempts to reestablish a radio link in different cells.

Too early CHO execution: CHO is configured for UE, and CHO execution is triggered. An RLF occurs shortly after a successful handover from a source cell to a target cell, or a handover fails in a handover procedure. The UE attempts to reestablish a radio link connection in the source cell.

CHO execution to a wrong cell: CHO is configured for UE, and CHO execution is triggered. An RLF occurs shortly after a successful handover from a source cell to a target cell, or a handover fails in a handover procedure. The UE attempts to reestablish a radio link connection in a cell other than the source cell and the target cell.

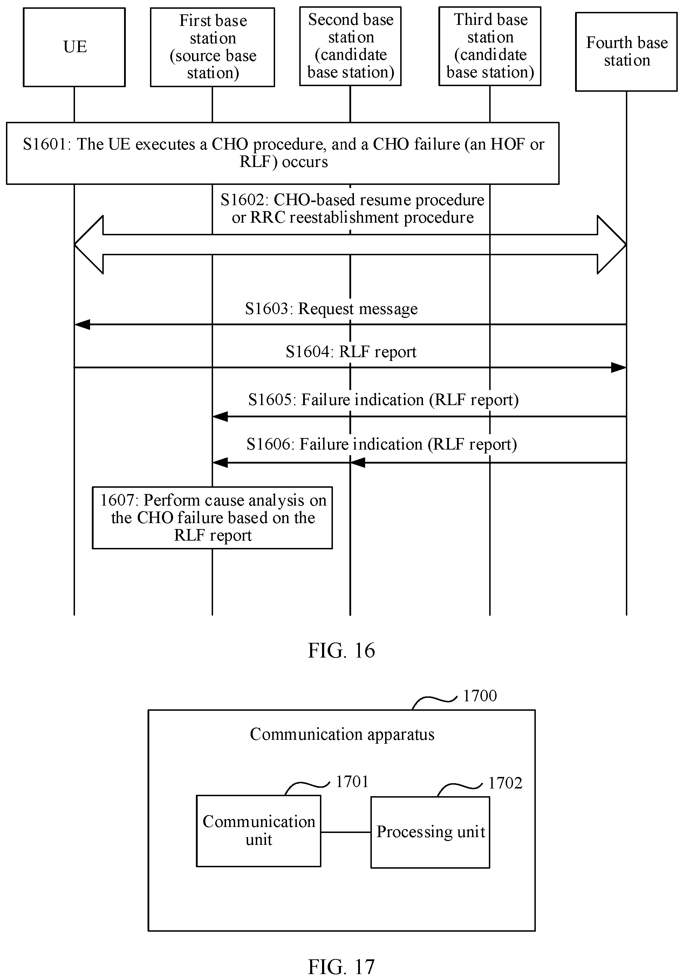

To implement the CHO failure cause, an embodiment of this application further provides a communication method. The method is applicable to the mobile communication system shown in FIG. 1. The following describes the method with reference to FIG. 16.

S1601: UE executes a CHO procedure, and a CHO failure occurs.

For the CHO procedure, refer to the CHO procedure in the embodiment shown in FIG. 7. Details are not described herein again. A first base station serving as a source base station prepares a first candidate cell list for the terminal device, and then, determines a final second candidate cell list through interaction with candidate base stations (a second base station and a third base station). Then, the first base station sends CHO configuration information to the UE. The second candidate cell list includes a cell in a third candidate cell list accepted by each candidate base station.

When the UE detects that one candidate cell in the second candidate cell list meets a handover triggering condition, CHO is triggered. The candidate cell is a target cell, and a candidate base station managing the target cell is a target base station (in this embodiment, an example in which the target base station is the second base station is used). The UE fails to perform random access to the target base station (that is, a handover failure (handover failure, HOF)) or an RLF occurs shortly after successful random access. The UE generates an RLF report.

S1602: The UE accesses a cell again by using a CHO-based resume or RRC reestablishment procedure, and establishes an RRC connection. A base station to which the cell belongs may be the source base station (the first base station), a reestablishment base station, or another base station, and is denoted as a fourth base station in this application.

S1603: The fourth base station sends a UE information request (for example, UE Information Request) to the UE, to request the UE to report the RLF report.

S1604: The UE sends a UE information response (for example, a UE Information Response) to the fourth base station, where the UE information response includes the RLF report.

S1605 and S1606: The fourth base station sends the RLF to a previous serving base station of the UE. If the HOF occurs on the UE, the previous serving base station is the source base station (the first base station). If the RLF occurs on the UE shortly after a successful handover, the previous serving base station is the target base station (that is, the second base station) at which the failure occurs.

The previous serving base station (the first base station or the second base station) may determine a failure type of the CHO failure based on the received RLF report, and determine that the CHO failure is CHO execution to a wrong cell. When the previous serving base station is the second base station, the second base station forwards the RLF report to the first base station, and the first base station performs cause analysis on the CHO failure. When the previous serving base station is the first base station, the first base station directly performs cause analysis on the CHO failure.

S1607: The first base station performs cause analysis on the CHO failure based on the RLF report.

Similar to the initial cause analysis procedure of the SCG failure performed by the MN in Embodiment 2, the first base station may determine an initial cause in the following steps:
The first base station determines a suitable cell based on the RLF report.
a. If the suitable cell is not in the first candidate cell list, it is determined that the initial cause is that the first base station is a problematic node that possibly causes wrong candidate cell selection.
b. If the suitable cell is in the first candidate cell list, but not in a third candidate cell list accepted by a fifth base station, it is determined that the initial cause is that the fifth base station is a problematic node that possibly causes wrong candidate cell selection. The fifth base station is a base station to which the suitable cell belongs.

Then, the first base station may further determine a root cause of the CHO failure. For a specific process, refer to descriptions of S1106 to S1112 in Embodiment 2.

It should be further noted that each step in the foregoing embodiments or instances may be performed by a corresponding device, or may be performed by a component such as a chip, a processor, or a chip system in the device. This is not limited in embodiments of this application. The foregoing embodiments are described only by using an example in which steps are executed by corresponding devices. In addition, specific implementations or examples in the foregoing embodiments constitute no limitation on the solutions provided in embodiments of this application.

It should be noted that in the foregoing embodiments, a part of steps may be selected for implementation, or a sequence of steps in the figure may be adjusted for implementation. This is not limited in this application. It should be understood that performing a part of steps in the figure, adjusting a sequence of steps, or combining the two manners for specific implementation shall fall within the protection scope of this application.

It may be understood that, to implement functions in the foregoing embodiments, devices in the foregoing embodiments include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

It may be understood that, the network architecture and the application scenario described in embodiments of this application are intended to describe the technical solutions in embodiments of the present invention more clearly, but do not constitute a limitation on the technical solutions provided in embodiments of the present invention. A person of ordinary skill in the art may be aware that, with evolution of the network architecture and emergence of a new service, the technical solutions provided in embodiments of the present invention are also applicable to a similar technical problem.

It should be noted that the "step" in embodiments of this application is merely an example, which is a representation method used to better understand embodiments, and does not constitute a substantive limitation on execution of the solutions in this application. For example, the "step" may also be understood as a "feature". In addition, the step does not constitute any limitation on an execution sequence of the solutions in this application, and a new technical solution formed through an operation, for example, step sequence change, step combination, or step splitting, performed on this basis without affecting implementation of the overall solutions also falls within the scope disclosed in this application.

Based on a same technical concept, this application further provides a communication apparatus. The communication apparatus may be applied to the mobile communication system shown in FIG. 1 or FIG. 3. The communication apparatus is configured to implement the methods provided in the foregoing embodiments. The communication apparatus may be a base station (for example, a master node or various secondary nodes) in the foregoing embodiments. Refer to FIG. 17. The communication apparatus 1700 includes a communication unit 1701 and a processing unit 1702.

The communication unit 1701 is configured to: receive and send data, and support the communication apparatus 1700 in communicating with another device.

The processing unit 1702 is configured to control and manage an action of the communication apparatus 1700, and perform the steps performed by the network device or the terminal device in the communication methods provided in the embodiments shown in FIG. 7 or FIG. 10.

Optionally, the communication apparatus 1700 further includes a storage unit, configured to store program code and/or data of the communication apparatus 1700.

The communication unit 1701 may be referred to as an input/output unit, a transceiver unit, or the like. The communication unit 1701 may be a transceiver and a communication interface. The processing unit 1702 may be a processor. When the communication apparatus 1700 is a module (for example, a chip) in a communication device (for example, a base station), the communication unit 1701 may be an input/output interface, an input/output circuit, an input/output pin, or the like, and may also be referred to as an interface, a communication interface, an interface circuit, or the like; and the processing unit 1702 may be a processor, a processing circuit, a logic circuit, or the like.

In an implementation, the communication apparatus 1700 is used in the master node in the foregoing embodiments. The processing unit 1702 is configured to perform the following steps:
obtaining identification information of at least one first candidate primary secondary cell, and sending identification information of at least one second candidate primary secondary cell to a terminal device, where the at least one first candidate primary secondary cell includes the at least one second candidate primary secondary cell, and the at least one second candidate primary secondary cell includes at least one third candidate primary secondary cell accepted by each of at least one candidate secondary node;
receiving first SCG failure information from the terminal device through the communication unit 1701; and
determining an initial cause of an SCG failure of the terminal device based on the first SCG failure information; or
sending second SCG failure information to a first secondary node based on the first SCG failure information through the communication unit 1701; or
sending second SCG failure information to a second secondary node based on the first SCG failure information through the communication unit 1701.

The second SCG failure information is used to determine a cause of the SCG failure of the terminal device, and the cause of the SCG failure is used to determine a problematic node for wrong candidate primary secondary cell selection. The first secondary node is a secondary node to which a source primary secondary cell belongs in a primary secondary cell change procedure performed by the terminal device. The second secondary node includes at least one candidate secondary node, or the second secondary node includes the at least one candidate secondary node and the first secondary node. The initial cause is used to analyze a possible problematic node for wrong candidate primary secondary cell selection.

In an implementation, the communication apparatus 1700 is used in the first secondary node (source secondary node) in the foregoing embodiment. The processing unit 1702 is configured to perform the following steps:
sending identification information of at least one first candidate primary secondary cell to a master node through the communication unit 1701, where the first secondary node is a secondary node to which a source primary secondary cell belongs in a primary secondary cell change procedure performed by a terminal device;
receiving second SCG failure information from the master node through the communication unit 1701; and
determining an initial cause of an SCG failure of the terminal device based on the second SCG failure information; or
determining a root cause of the SCG failure of the terminal device based on the second SCG failure information.

In an implementation, the communication apparatus 1700 is used in the third secondary node (a secondary node to which a primary secondary cell belongs) in the foregoing embodiments. The processing unit 1702 is configured to perform the following steps:
receiving second SCG failure information from a master node through the communication unit 1701, where the third secondary node is a secondary node to which a suitable primary secondary cell belongs, and the suitable primary secondary cell is determined by the master node; and
determining an initial cause of an SCG failure of a terminal device based on the second SCG failure information; or
determining a root cause of the SCG failure of the terminal device based on the second SCG failure information.

In an implementation, the communication apparatus 1700 is used in the fourth secondary node (one of the second secondary nodes) in the foregoing embodiments. The processing unit 1702 is configured to perform the following steps:
receiving second SCG failure information from a master node through the communication unit 1701; and
determining an initial cause of an SCG failure of a terminal device based on the second SCG failure information.

It should be noted that for a specific function of the processing unit 1702, refer to related descriptions in the foregoing embodiments. Details are not described herein again.

It should be noted that division into the modules in embodiments of this application is an example, and is merely logical function division. In actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) or a processor (processor) to perform all or a part of the steps of the methods in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

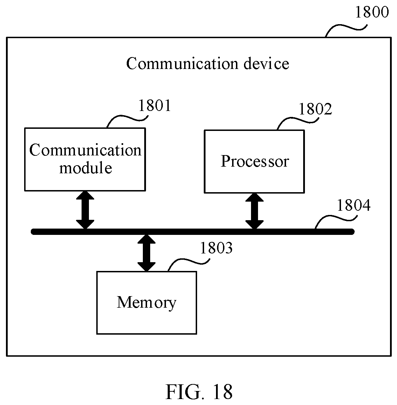

Based on the foregoing embodiments, an embodiment of this application further provides a communication device. The communication device may be a base station in the mobile communication system shown in FIG. 1 or FIG. 3. The communication device can implement the methods in the foregoing embodiments, and has a function of the communication apparatus 1700. As shown in FIG. 18, the communication device 1800 includes a communication module 1801, a processor 1802, and a memory 1803. The communication module 1801, the processor 1802, and the memory 1803 are connected to each other.

Optionally, the communication module 1801, the processor 1802, and the memory 1803 are connected to each other through a bus 1804. The bus 1804 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 18, but this does not mean that there is only one bus or only one type of bus.

The communication module 1801 is configured to receive and send data, to implement communication with another device. Optionally, the communication module 1801 may include a transceiver or a communication interface. This is not limited in this application.

For a function of the processor 1802, refer to the descriptions in the foregoing embodiments. Details are not described herein again.

The processor 1802 may be a central processing unit (central processing unit, CPU), a network processor (network processor, NP), a combination of a CPU and an NP, or the like. The processor 1802 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof. The processor 1802 may implement the foregoing functions by hardware or certainly by hardware executing corresponding software. The steps in the methods disclosed with reference to embodiments of this application may be directly performed and completed by the processor 1802, or may be performed and completed by a combination of hardware and software modules in the processor 1802.

The memory 1803 is configured to store program instructions, data, and the like. Specifically, the program instructions may include program code, and the program code includes computer operation instructions. The memory 1803 may include a volatile memory (volatile memory), for example, a random access memory (random access memory, RAM), or may further include a non-volatile memory (non-volatile memory), for example, at least one magnetic disk memory, a hard disk drive (hard disk drive, HDD), or a solid state drive (solid state drive, SSD). Alternatively, the memory 1803 may be any other medium that can be configured to carry or store program code in a form of instructions or a data structure and that can be accessed by a computer. This is not limited in this application. The processor 1802 executes the program instructions stored in the memory 1803, to implement the foregoing functions, thereby implementing the methods provided in the foregoing embodiments.

Based on the foregoing embodiments, an embodiment of this application further provides a computer program product. The computer program product includes a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

Optionally, the computer may include but is not limited to the base station in the mobile communication system shown in FIG. 1 or FIG. 3.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of instructions or a data structure and can be accessed by a computer.

Based on the foregoing embodiments, an embodiment of this application further provides a chip. The chip is configured to read a computer program stored in a memory, to implement the method provided in the foregoing embodiments. Optionally, the chip may include a processor and a memory. The processor is coupled to the memory, and configured to read the computer program stored in the memory, to implement the methods provided in the foregoing embodiments.

Based on the foregoing embodiments, an embodiment of this application provides a chip system. The chip system includes a processor, configured to support a computer apparatus in implementing a function related to the terminal device in the foregoing embodiments. In a possible design, the chip system further includes a memory, and the memory is configured to store a program and data that are necessary for the computer apparatus. The chip system may include a chip, or may include a chip and another discrete device.

In conclusion, embodiments of this application provide a communication method and a device. In the method, when the SCG failure occurs in the primary secondary cell addition or change procedure performed by the terminal device, after the master node receives the first SCG failure information reported by the terminal device, the master node may perform cause analysis on the SCG failure of the terminal device based on the first SCG failure information; or may send the second SCG failure information to the first secondary node or the second secondary node, so that the first secondary node or the second secondary node can perform cause analysis on the SCG failure of the terminal device based on the second SCG failure information. According to the method, a network side can implement cause analysis on the SCG failure of the terminal device based on the SCG failure information reported by the terminal device, and determine a problematic node for wrong candidate primary secondary cell selection, configuration optimization on the network side can be completed, and more proper configuration can be performed for the terminal device in a subsequent primary secondary cell addition or change procedure of the UE, to reduce a probability of the SCG failure of the terminal device.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, and computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, comprising:
obtaining, by a master node, identification information of at least one first candidate primary secondary cell, and sending configuration information of at least one second candidate primary secondary cell to a terminal device, wherein the at least one first candidate primary secondary cell comprises the at least one second candidate primary secondary cell, and the at least one second candidate primary secondary cell comprises at least one third candidate primary secondary cell accepted by each of at least one candidate secondary node;
receiving, by the master node, first SCG failure information from the terminal device; and
determining, by the master node, an initial cause of an SCG failure of the terminal device based on the first SCG failure information; or
sending, by the master node, second SCG failure information to a first secondary node based on the first SCG failure information; or
sending, by the master node, the second SCG failure information to a second secondary node based on the first SCG failure information, wherein
the second SCG failure information is used to determine a cause of the SCG failure of the terminal device, and the cause of the SCG failure is used to determine a problematic node for wrong candidate primary secondary cell selection; the first secondary node is a secondary node to which a source primary secondary cell belongs in a primary secondary cell change procedure performed by the terminal device; the second secondary node comprises at least one candidate secondary node to which the at least one first candidate primary secondary cell belongs, or the second secondary node comprises the at least one candidate secondary node to which the at least one first candidate primary secondary cell belongs and the first secondary node; and the initial cause is used to analyze a possible problematic node for wrong candidate primary secondary cell selection.

2. The method according to claim 1, wherein obtaining, by the master node, the identification information of the at least one first candidate primary secondary cell comprises: generating, by the master node, the identification information of the at least one first candidate primary secondary cell; and
determining, by the master node, the initial cause of the SCG failure of the terminal device based on the first SCG failure information comprises:
determining, by the master node, a suitable primary secondary cell based on the first SCG failure information; and
if the suitable primary secondary cell is not in the at least one first candidate primary secondary cell, determining, by the master node, that the initial cause is that the master node is a problematic node that possibly causes wrong candidate primary secondary cell selection; or
if the suitable primary secondary cell is in the at least one first candidate primary secondary cell and is not in at least one third candidate primary secondary cell accepted by a third secondary node, determining, by the master node, that the initial cause is that the third secondary node is a problematic node that possibly causes wrong candidate primary secondary cell selection, wherein the third secondary node is a secondary node to which the suitable primary secondary cell belongs.

3. The method according to claim 2, wherein when the initial cause is that the master node is a problematic node that possibly causes wrong candidate primary secondary cell selection, the method further comprises:
determining, by the master node, a root cause of the SCG failure of the terminal device in the following step:
if the suitable primary secondary cell is in a first cell set, determining, by the master node, that the root cause is that the master node is a problematic node that causes wrong candidate primary secondary cell selection, wherein
the first cell set comprises N cells that have best signal quality in a first measurement result.

4. The method according to claim 1, wherein obtaining, by the master node, the identification information of the at least one first candidate primary secondary cell comprises: receiving, by the master node, the identification information of the at least one first candidate primary secondary cell from the first secondary node; and
determining, by the master node, the initial cause of the SCG failure of the terminal device based on the first SCG failure information comprises:
determining, by the master node, a suitable primary secondary cell based on the first SCG failure information; and
if the suitable primary secondary cell is not in the at least one first candidate primary secondary cell, determining, by the master node, that the initial cause is that the first secondary node is a problematic node that possibly causes wrong candidate primary secondary cell selection;
or
if the suitable primary secondary cell is in the at least one first candidate primary secondary cell and is not in at least one third candidate primary secondary cell accepted by a third secondary node, determining, by the master node, that the initial cause is that the third secondary node is a problematic node that possibly causes wrong candidate primary secondary cell selection, wherein the third secondary node is a secondary node to which the suitable primary secondary cell belongs.

5. The method according to claim 4, wherein when the initial cause is that the first secondary node is a problematic node that possibly causes wrong candidate primary secondary cell selection, the method further comprises:
sending, by the master node, the second SCG failure information to the first secondary node.

6. The method according to claim 2 or 4, wherein when the initial cause is that the third secondary node is a problematic node that possibly causes wrong candidate primary secondary cell selection, the method further comprises:
determining, by the master node, a root cause of the SCG failure of the terminal device in the following step:
if the suitable primary secondary cell is in a second cell set, determining, by the master node, that the root cause is that the third secondary node is a problematic node that causes wrong candidate primary secondary cell selection, wherein
the second cell set comprises M cells that are managed by the third secondary node and that have best signal quality in a first measurement result.

7. The method according to claim 2 or 4, wherein when the initial cause is that the third secondary node is a problematic node that possibly causes wrong candidate primary secondary cell selection, the method further comprises:
sending, by the master node, the second SCG failure information to the third secondary node.

8. The method according to claim 1, wherein after sending, by the master node, the second SCG failure information to the first secondary node based on the first SCG failure information, the method further comprises:
receiving, by the master node, a first notification message from the first secondary node, wherein the first notification message comprises first indication information, the first indication information indicates that the SCG failure of the terminal device is not caused by the first secondary node, or indicates that the SCG failure of the terminal device is caused by a third secondary node, the third secondary node is a secondary node to which a suitable primary secondary cell belongs, and the suitable primary secondary cell is determined by the first secondary node based on the second SCG failure information.

9. The method according to claim 8, wherein the method further comprises:
sending, by the master node, the second SCG failure information to the third secondary node.

10. The method according to claim 7 or 9, wherein after sending, by the master node, the second SCG failure information to the third secondary node, the method further comprises:
receiving, by the master node, a second notification message from the third secondary node, wherein the second notification message comprises second indication information, and the second indication information indicates that the SCG failure of the terminal device is not caused by the third secondary node.

11. The method according to claim 1, wherein after sending, by the master node, the second SCG failure information to the second secondary node based on the first SCG failure information, the method further comprises:
receiving, by the master node, a third notification message from a fourth secondary node in the second secondary node, wherein the third notification message comprises third indication information, and the third indication information indicates that the SCG failure of the terminal device is not caused by the fourth secondary node.

12. A communication method, comprising:
sending, by a first secondary node, identification information of at least one first candidate primary secondary cell to a master node, wherein the first secondary node is a secondary node to which a source primary secondary cell belongs in a primary secondary cell change procedure performed by a terminal device;
receiving, by the first secondary node, second SCG failure information from the master node;
and
determining, by the first secondary node, an initial cause of an SCG failure of the terminal device based on the second SCG failure information; or
determining, by the first secondary node, a root cause of the SCG failure of the terminal device based on the second SCG failure information.

13. The method according to claim 12, wherein determining, by the first secondary node, the initial cause of the SCG failure of the terminal device based on the second SCG failure information comprises:
determining, by the first secondary node, a suitable primary secondary cell based on the second SCG failure information; and
if the suitable primary secondary cell is not in the at least one first candidate primary secondary cell, determining, by the first secondary node, that the initial cause is that the first secondary node is a problematic node that possibly causes wrong candidate primary secondary cell selection; or
if the suitable primary secondary cell is in the at least one first candidate primary secondary cell and is not in at least one third candidate primary secondary cell accepted by a third secondary node, determining, by the first secondary node, that the initial cause is that the third secondary node is a problematic node that possibly causes wrong candidate primary secondary cell selection, wherein the third secondary node is a secondary node to which the suitable primary secondary cell belongs, and identification information of the at least one third candidate primary secondary cell accepted by the third secondary node is sent by the master node.

14. The method according to claim 13, wherein when the initial cause is that the third secondary node is a problematic node that possibly causes wrong candidate primary secondary cell selection, the method further comprises:
sending, by the first secondary node, a first notification message to the master node, wherein the first notification message comprises first indication information, and the first indication information indicates that the SCG failure of the terminal device is not caused by the first secondary node, or indicates that the SCG failure of the terminal device is caused by the third secondary node.

15. The method according to claim 13, wherein when the initial cause is that the first secondary node is a problematic node that possibly causes wrong candidate primary secondary cell selection, the method further comprises:
determining, by the first secondary node, the root cause of the SCG failure of the terminal device in the following step:
if the suitable primary secondary cell is in a first cell set, determining, by the first secondary node, that the root cause is that the first secondary node is a problematic node that causes wrong candidate primary secondary cell selection, wherein the first cell set comprises N cells that have best signal quality in a first measurement result.

16. The method according to claim 13, wherein when the initial cause is that the third secondary node is a problematic node that possibly causes wrong candidate primary secondary cell selection, the method further comprises:
determining, by the first secondary node, the root cause of the SCG failure of the terminal device in the following step:
if the suitable primary secondary cell is in a second cell set, determining, by the first secondary node, that the root cause is that the third secondary node is a problematic node that causes wrong candidate primary secondary cell selection, wherein
the second cell set comprises M cells that are managed by the third secondary node and that have best signal quality in a first measurement result.

17. The method according to claim 16, wherein when the root cause is that the third secondary node is a problematic node that causes wrong candidate primary secondary cell selection, the method further comprises:
sending, by the first secondary node, a first notification message to the master node, wherein the first notification message comprises first indication information, and the first indication information indicates that the SCG failure of the terminal device is caused by the third secondary node.

18. The method according to claim 12, wherein determining, by the first secondary node, the root cause of the SCG failure of the terminal device based on the second SCG failure information comprises:
determining, by the first secondary node, a suitable primary secondary cell based on the second SCG failure information; and
if the suitable primary secondary cell is in a first cell set, determining, by the first secondary node, that the root cause is that the first secondary node is a problematic node that causes wrong candidate primary secondary cell selection, wherein the first cell set comprises N cells that have best signal quality in a first measurement result.

19. The method according to claim 15 or 18, wherein if the suitable primary secondary cell is not in the first cell set, the method further comprises:
sending, by the first secondary node, a first notification message to the master node, wherein the first notification message comprises first indication information, and the first indication information indicates that the SCG failure of the terminal device is not caused by the first secondary node.

20. A communication method, comprising:
receiving, by a third secondary node, second SCG failure information from a master node, wherein the third secondary node is a secondary node to which a suitable primary secondary cell belongs, and the suitable primary secondary cell is determined by the master node; and
determining, by the third secondary node, an initial cause of an SCG failure of a terminal device based on the second SCG failure information; or
determining, by the third secondary node, a root cause of the SCG failure of the terminal device based on the second SCG failure information.

21. The method according to claim 20, wherein before receiving, by the third secondary node, the second SCG failure information from the master node, the method further comprises: receiving, by the third secondary node from the master node, identification information of at least one first candidate primary secondary cell managed by the third secondary node; and
determining, by the third secondary node, the initial cause of the SCG failure of the terminal device based on the second SCG failure information comprises:
determining, by the third secondary node, a suitable primary secondary cell based on the second SCG failure information; and
if the suitable primary secondary cell is in the at least one first candidate primary secondary cell, determining, by the third secondary node, that the initial cause is that the third secondary node is a problematic node that possibly causes wrong candidate primary secondary cell selection; or
if the suitable primary secondary cell is not in the at least one first candidate primary secondary cell, determining, by the third secondary node, that the initial cause is that the third secondary node is not a problematic node that causes wrong candidate primary secondary cell selection.

22. The method according to claim 21, wherein when the initial cause is that the third secondary node is a problematic node that possibly causes wrong candidate primary secondary cell selection, the method further comprises:
determining, by the third secondary node, the root cause of the SCG failure of the terminal device in the following step:
if the suitable primary secondary cell is in a second cell set, determining, by the third secondary node, that the root cause is that the third secondary node is a problematic node that causes wrong candidate cell selection, wherein
the second cell set comprises M cells that are managed by the third secondary node and that have best signal quality in a first measurement result.

23. The method according to claim 21, wherein when the initial cause is that the third secondary node is not a problematic node that causes wrong candidate primary secondary cell selection, the method further comprises:
sending, by the third secondary node, a second notification message to the master node, wherein the second notification message comprises second indication information, and the second indication information indicates that the SCG failure of the terminal device is not caused by the third secondary node.

24. The method according to claim 20, wherein determining, by the third secondary node, the root cause of the SCG failure of the terminal device based on the second SCG failure information comprises:
determining, by the third secondary node, a suitable primary secondary cell based on the second SCG failure information; and
if the suitable primary secondary cell is in a second cell set, determining, by the third secondary node, that the root cause is that the third secondary node is a problematic node that causes wrong candidate cell selection, wherein
the second cell set comprises M cells that are managed by the third secondary node and that have best signal quality in a first measurement result.

25. A communication apparatus, comprising:
a communication unit, configured to receive and send data; and
a processing unit, configured to perform the method according to any one of claims 1 to 24.

26. A communication device, comprising:
a memory, configured to store program instructions; and
a processor, configured to read the program instructions in the memory, so that the communication device performs the method according to any one of claims 1 to 24.

27. A computer-readable storage medium, wherein the computer-readable storage medium stores a computer program, and when the computer program is run on a computer, the computer is enabled to perform the method according to any one of claims 1 to 24.

28. A chip, wherein the chip comprises a processor and a memory, the processor is coupled to the memory, and the processor is configured to read a computer program stored in the memory, so that the chip performs the method according to any one of claims 1 to 24.
